# FASCICULE DE BREVET EUROPEEN

(11) **EP 3 937 873 B1**
(45) Date de publication et mention de la délivrance du brevet: **16.10.2024**
(21) Numéro de dépôt: 20705203.6
(22) Date de dépôt: 18.02.2020
(51) Int. Cl.: A61G 7/08, B62B 5/00, A61G 7/05, A61G 13/04

(54) **DISPOSITIF D'AIDE A LA CONDUITE DE ROUE DE SYSTEME DE PROPULSION ELECTRIQUE AMOVIBLE POUR UN OBJET ROULANT**
VORRICHTUNG ZUR UNTERSTÜTZUNG DES ANTRIEBS EINES RADES EINES ABNEHMBAREN ELEKTRISCHEN ANTRIEBSSYSTEMS FÜR EIN ROLLENDES OBJEKT
DEVICE FOR ASSISTING WITH THE DRIVING OF A WHEEL OF A REMOVABLE ELECTRIC PROPULSION SYSTEM FOR A ROLLING OBJECT

(30) Priorité: 18.02.2019 FR 1902772
(43) Date de publication de la demande: 19.01.2022
(73) Titulaire: IFP Energies nouvelles, 92852 Rueil-Malmaison (FR)
(72) Inventeur: VENTURI, Stéphane, 92852 Rueil-Malmaison Cedex (FR); SANZ, Elena, 92852 Rueil-Malmaison Cedex (FR)
(74) Mandataire: IFP Energies nouvelles
(86) Numéro de dépôt international: PCT/EP2020/054140
(87) Numéro de publication internationale: WO 2020/187517

(56) Documents cités:
- WO-A1-2012/171079
- WO-A1-2013/156030
- WO-A1-2018/130315
- US-A1- 2006 045 711

## Description

### Domaine technique

L'invention concerne le domaine de transport des objets roulants, en particulier des lits roulants, par exemple des lits d'hôpitaux. La demande de brevet US2006045711 décrit un tel système.

Le déplacement des charges lourdes roulantes par un utilisateur peut entraîner des difficultés pour l'utilisateur, en particulier si cette action est répétée, telles que des troubles musculo-squelettiques.

### Technique antérieure

Afin de rendre le déplacement des charges lourdes roulantes plus facile et plus ergonomique, il a été envisagé d'équiper ces charges lourdes de machines électriques. Par exemple, une première idée a consisté à équiper chaque lit d'hôpital d'un système d'entraînement électrique des roues. Une telle solution est onéreuse, car elle nécessite le remplacement ou la modification de l'ensemble des lits, ce que les hôpitaux ne peuvent pas se permettre. De plus, le système d'entraînement et sa batterie augmentent le poids du lit. Par conséquent, lorsque la batterie est déchargée, les efforts à fournir pour déplacer le lit sont plus importants.

De la même façon, dans le domaine de la logistique ou du commerce, il a été envisagé de rendre électrique tous les chariots. Là aussi, une telle solution est onéreuse.

Une alternative est de prévoir un système amovible de propulsion des objets roulants. Plusieurs solutions techniques ont été envisagées.

Par exemple, la demande de brevet WO 01/85086 décrit un système de propulsion motorisée pour un lit. Le système de propulsion est configuré pour s'atteler à un ou plusieurs points du lit. De par les moyens d'attelage prévus pour ce système de propulsion, ce système ne peut pas être universel et adapté à différents objets roulants. En effet, il ne peut pas être attelé à un objet roulant non muni d'une pièce d'attelage. De plus, pour ce système de propulsion, toutes les roues de l'objet roulant restent en contact avec le sol. Par conséquent, l'orientation de l'attelage (système de propulsion et lit) est plus compliquée, les forces de frottement sont élevées, et la roue motorisée nécessite plus de puissance.

La demande de brevet WO 2012/171079 décrit un deuxième système de propulsion d'un lit d'hôpital. Le système de propulsion est configuré pour lever deux roues du lit. Toutefois, le mécanisme de préhension des roues est complexe et encombrant : la dimension latérale (direction parallèle à l'axe des roues motorisées) est importante (supérieure à la largeur des roues du lit) et peut dépasser les dimensions latérales du lit, ce qui peut être gênant pour le déplacement du lit, en particulier dans un espace réduit tel qu'un couloir ou un ascenseur d'hôpital.

La demande de brevet WO 2013/156030 décrit un troisième système de propulsion d'un lit d'hôpital. Le système de propulsion est configuré pour lever deux roues du lit. Toutefois, le système présente des dimensions latérale (direction parallèle à l'axe des roues motorisées) et longitudinale (direction perpendiculaire à l'axe des roues) qui sont importantes : la plateforme arrière dépasse le lit et la distance entre les roues non motorisées peuvent dépasser les dimensions du lit, ce qui peut être gênant pour le déplacement du lit, en particulier dans un espace réduit, tel qu'un couloir ou un ascenseur d'hôpital.

### Résumé de l'invention

L'invention est définie par les revendications.

Pour pallier ces inconvénients, la présente invention concerne un système/dispositif de propulsion électrique pour un objet roulant, comprenant un châssis avec au moins une roue motorisée, et au moins une roue supplémentaire, de préférence non motorisée, un guidon, et des moyens d'attelage. Les moyens d'attelage sont prévus pour réaliser la préhension, l'orientation, l'immobilisation et le levage d'au moins une roue de la charge roulante. Préférablement, les moyens d'orientation de la roue de l'objet roulant orientent la roue selon une direction perpendiculaire à la direction longitudinale du châssis. Ainsi, le déplacement d'objet roulant lourd est rendu facile et ergonomique. De plus, les dimensions des moyens d'attelage sont réduites, en particulier les dimensions latérales, et le système de propulsion est plus compact, ce qui permet de déplacer l'objet roulant, y compris dans un espace réduit. En outre, ces moyens d'attelage sont universels et sont adaptés à de nombreux types d'objets roulants, car l'objet roulant ne nécessite pas de moyens d'attelage spécifique.

Selon un premier aspect, l'invention concerne un système de propulsion électrique amovible pour un objet roulant, le système de propulsion comprenant un châssis muni d'au moins une roue entrainée par une machine électrique, et d'au moins une roue non entraînée, un guidon et des moyens d'attelage du système de propulsion à l'objet roulant, lesdits moyens d'attelage comprenant des moyens de préhension, d'orientation, d'immobilisation et de levage d'au moins une roue de l'objet roulant, dans lequel : les moyens de préhension comprennent au moins un jeu de deux éléments de saisie dont les axes principaux sont sensiblement perpendiculaires à la direction longitudinale du châssis, les deux éléments de saisie étant adaptés pour venir en contact avec la roue de l'objet roulant ; les moyens d'orientation sont adaptés pour orienter l'au moins une roue de l'objet roulant dans une direction sensiblement perpendiculaire à la direction longitudinale du châssis du système de propulsion.

Selon un ou plusieurs modes de réalisation, les deux éléments de saisie sont adaptés pour permettre l'introduction de la roue de l'objet roulant entre lesdits éléments de saisie de sorte que l'axe de rotation de la roue de l'objet roulant soit sensiblement perpendiculaire aux axes principaux des deux éléments de saisie.

Selon un ou plusieurs modes de réalisation, la distance entre les deux éléments de saisie est prédéterminée pour être : strictement inférieure au diamètre de la roue de l'objet roulant ; et supérieure au égale à l'épaisseur de la roue de l'objet roulant.

Selon un ou plusieurs modes de réalisation, un des deux éléments de saisie est plus long que l'autre élément de saisie du jeu d'éléments de saisie, selon les axes principaux.

Selon un ou plusieurs modes de réalisation, l'élément de saisie disposé du côté de la roue motorisée est plus long que l'autre élément de saisie du jeu des deux éléments de saisie.

Selon un ou plusieurs modes de réalisation, un élément de butée est disposé du côté intérieur des moyens d'attelage par rapport aux éléments de saisie dans une direction sensiblement perpendiculaire aux axes principaux des éléments de saisie l'élément de butée étant adapté pour guider la roue de l'objet roulant de sorte que la dite roue vienne en butée contre l'élément de saisie disposé du côté de la roue motorisée.

Selon un ou plusieurs modes de réalisation, l'élément de butée est disposé sur un élément de saisie.

Selon un ou plusieurs modes de réalisation, la distance entre l'élément de butée et un élément de saisie est prédéterminée pour être strictement supérieure au diamètre de la roue de l'objet roulant.

Selon un ou plusieurs modes de réalisation, une pièce mobile est connectée à au moins un élément de saisie au travers d'un axe de rotation perpendiculaire à l'axe principal de l'élément de saisie, la pièce mobile étant adaptée pour tourner autour de l'axe de rotation et prolonger l'élément de saisie selon l'axe principal de l'élément de saisie.

Selon un ou plusieurs modes de réalisation, l'axe principal de la pièce mobile est vertical et l'axe de rotation est parallèle à la direction longitudinale du châssis.

Selon un ou plusieurs modes de réalisation, la pièce mobile comprend un axe principal sensiblement horizontal, et parallèle à la direction longitudinale du châssis, la dite pièce mobile étant disposée sur le côté opposé à l'élément de saisie adjacent, et comprenant un axe de rotation vertical.

Selon un ou plusieurs modes de réalisation, la pièce mobile comprend une portion interne disposée sur le côté en vis-à-vis de l'élément de saisie adjacent.

Selon un ou plusieurs modes de réalisation, au moins une des roues du système de propulsion comprend un système de freinage.

Selon un deuxième aspect, l'invention concerne un système de propulsion électrique amovible pour un objet roulant, le système de propulsion comprenant un châssis muni d'au moins une roue entrainée par une machine électrique, et d'au moins une roue non entraînée, un guidon et des moyens d'attelage du système de propulsion à l'objet roulant, lesdits moyens d'attelage comprenant des moyens de préhension, d'orientation, d'immobilisation et de levage d'au moins une roue de l'objet roulant, dans lequel : les moyens d'orientation sont adaptés pour orienter l'au moins une roue de l'objet roulant dans une direction sensiblement perpendiculaire à la direction longitudinale du châssis du système de propulsion ; et les moyens d'immobilisation comprennent un bras d'arrimage sensiblement horizontal, portant un élément d'immobilisation à une de ses extrémités.

Selon un ou plusieurs modes de réalisation, l'élément d'immobilisation est orienté vers l'extérieur du châssis selon l'axe perpendiculaire à la direction longitudinale du châssis, ou dans lequel l'élément d'immobilisation est orienté vers l'intérieur du châssis selon l'axe perpendiculaire à la direction longitudinale du châssis.

Selon un ou plusieurs modes de réalisation, l'élément d'immobilisation comprend un élément de support adapté pour supporter la roue de l'objet roulant par actuation du bras d'arrimage.

Selon un ou plusieurs modes de réalisation, l'élément de support comprend une pièce plate, inclinée ou courbée adaptée pour passer sous la roue de l'objet roulant.

Selon un ou plusieurs modes de réalisation, l'élément de support comprend en élément en forme de cuillère, de pelle ou d'équerre.

Selon un ou plusieurs modes de réalisation, l'élément de support est adapté pour passer sous, supporter et immobiliser la roue de l'objet roulant.

Selon un ou plusieurs modes de réalisation, l'élément de support comprend une partie sensiblement horizontale, adaptée pour passer sous la roue de l'objet roulant, et une partie sensiblement verticale, adaptée pour venir en contact avec la roue de l'objet roulant par actuation des bras d'arrimage.

Selon un ou plusieurs modes de réalisation, un élément de butée est disposé sur le bras d'arrimage.

Selon un ou plusieurs modes de réalisation, l'élément de butée est adapté pour guider la roue de l'objet roulant de sorte que la dite roue puisse être placée entre l'élément de butée et l'élément d'immobilisation.

Selon un ou plusieurs modes de réalisation, l'élément de butée est disposé du côté intérieur du bras d'arrimage par rapport à l'élément d'immobilisation.

Selon un ou plusieurs modes de réalisation, dans lequel deux bras d'arrimage déplaçable en translation le long d'axes principaux sensiblement parallèles l'un de l'autre, ou comprenant deux bras d'arrimage déplaçable en rotation autour d'axes de pivot verticaux respectifs.

Selon un ou plusieurs modes de réalisation, les deux bras d'arrimage sont mis en mouvement l'un par rapport à l'autre au moyen d'un actuateur relié à chacun desdits bras d'arrimage, ou dans lequel les deux bras d'arrimage sont mis en mouvement au moyen d'actuateurs respectifs reliés au châssis.

Selon un ou plusieurs modes de réalisation, les moyens de préhension comprennent au moins un jeu de deux éléments de saisie dont les axes principaux sont sensiblement perpendiculaires à la direction longitudinale du châssis, les deux éléments de saisie étant adaptés pour venir en contact avec la roue de l'objet roulant, lesdits éléments de saisie étant disposés à une extrémité dudit bras d'arrimage.

Selon un troisième aspect, l'invention concerne un système de propulsion électrique amovible pour un objet roulant, le système de propulsion comprenant un châssis muni d'au moins une roue entrainée par une machine électrique, et d'au moins une roue non entraînée un guidon et des moyens d'attelage du système de propulsion à l'objet roulant, lesdits moyens d'attelage comprenant des moyens de préhension, d'orientation, d'immobilisation et de levage d'au moins une roue de l'objet roulant, dans lequel : les moyens d'orientation sont adaptés pour orienter l'au moins une roue de l'objet roulant dans une direction sensiblement perpendiculaire à la direction longitudinale du châssis du système de propulsion ; et les moyens de levage comprennent une structure articulée en partie centrale du châssis entre l'au moins une roue motorisée et l'au moins une roue non motorisée.

Selon un ou plusieurs modes de réalisation, la structure articulée comprend d'une part, une première portion de châssis supportée par l'au moins une roue motorisée, et comprend d'autre part, une deuxième portion de châssis supportée par l'au moins une roue non motorisée.

Selon un ou plusieurs modes de réalisation, lesdites portions de châssis sont articulées l'une par rapport à l'autre autour d'un axe de rotation horizontal sensiblement perpendiculaire à la direction longitudinale du châssis.

Selon un ou plusieurs modes de réalisation, des éléments d'immobilisation adaptés pour immobiliser la roue de l'objet roulant sont liés à l'axe de rotation horizontal.

Selon un ou plusieurs modes de réalisation, l'axe de rotation horizontal est lié à des bras d'arrimage, les bras d'arrimage étant sensiblement horizontaux et portant à une de leurs extrémités les éléments d'immobilisation.

Selon un ou plusieurs modes de réalisation, un premier actuateur est relié à chacune des portions de châssis et permet de contrôler la position d'une portion de châssis par rapport à l'autre.

Selon un ou plusieurs modes de réalisation, le premier actuateur contrôle la hauteur de la partie centrale du châssis comprenant l'axe de rotation horizontal.

Selon un ou plusieurs modes de réalisation, le premier actuateur est adapté pour déplacer vers le haut l'axe de rotation horizontal en modifiant un angle entre les portions de châssis au niveau de l'axe de rotation horizontal.

Selon un ou plusieurs modes de réalisation, l'axe de rotation horizontal est disposé sur une extrémité basse des portions de châssis, et l'angle est augmenté pour passer d'une position basse à une position haute des portions de châssis.

Selon un ou plusieurs modes de réalisation, le premier actuateur est connecté d'une part, à une portion centrale de la première portion de châssis, et d'autre part, à une portion d'extrémité arrière de la deuxième portion de châssis.

Selon un ou plusieurs modes de réalisation, le premier actuateur est unique et connecté à une portion centrale des portions de châssis selon une vue de dessus.

Selon un ou plusieurs modes de réalisation, le premier actuateur est assisté d'un actuateur complémentaire, chaque actuateur étant connecté à une portion d'extrémité latérale des portions de châssis selon une vue de dessus.

Selon un ou plusieurs modes de réalisation, le premier actuateur est unique et est connecté à une portion d'extrémité des portions de châssis selon une vue de dessus.

Selon un ou plusieurs modes de réalisation, le premier actuateur est adapté pour : actionner d'une part, une bielle croisée connectée à une première extrémité du premier actuateur ; et actionner d'autre part, une bielle non croisée connectée à la deuxième extrémité du premier actuateur, et dans lequel une desdites bielles est connectée selon l'axe longitudinal du châssis à une portion centrale de la première portion de châssis, et l'autre desdites bielles est connectée selon l'axe longitudinal du châssis à une portion d'extrémité arrière de la deuxième portion de châssis.

Selon un ou plusieurs modes de réalisation, le premier actuateur est adapté pour : actionner d'une part, une bielle croisée connectée à une première extrémité du premier actuateur au travers d'un élément lui-même lié à une portion centrale de la première portion de châssis ; et actionner d'autre part, une bielle non croisée connectée à la deuxième extrémité du premier actuateur au travers de l'élément lui-même lié à une portion centrale de la première portion de châssis, et dans lequel lesdites bielles sont chacune connectées selon l'axe longitudinal du châssis en leur autre extrémité à une portion d'extrémité arrière de la deuxième portion de châssis .

Selon un quatrième aspect, l'invention concerne un système de propulsion électrique amovible pour un objet roulant, le système de propulsion comprenant un châssis muni d'au moins une roue entrainée par une machine électrique, et d'au moins une roue non entraînée, un guidon et des moyens d'attelage du système de propulsion à l'objet roulant, lesdits moyens d'attelage comprenant des moyens de préhension, d'orientation, d'immobilisation et de levage d'au moins une roue de l'objet roulant, le système de propulsion comprenant en outre : des moyens d'aide à la conduite comprenant au moins un bras de longueur variable adapté pour faire varier la distance entre l'au moins une roue entraînée et l'au moins une roue non entrainée.

Selon un ou plusieurs modes de réalisation, le bras de longueur variable est d'une part, supporté par la roue non entraînée, et d'autre part, connecté au châssis ou connecté aux moyens d'attelage portant un élément d'immobilisation.

Selon un ou plusieurs modes de réalisation, le bras extensible est d'une part, supporté par la roue non entraînée, et d'autre part, connecté à une portion non motorisée du châssis.

Selon un ou plusieurs modes de réalisation, le bras de longueur variable est sensiblement horizontal et comprend un axe principal sensiblement parallèle à la direction longitudinale du châssis.

Selon un ou plusieurs modes de réalisation, un actuateur est relié audit bras de longueur variable et à la portion non motorisée pour faire varier la longueur dudit bras de longueur variable.

Selon un ou plusieurs modes de réalisation, le système de propulsion électrique amovible comprend des moyens de blocage directionnel adaptés pour bloquer/débloquer la rotation de la roue non motorisée autour d'un axe vertical, et dans lequel le mouvement directionnel de la roue non motorisée est adapté pour être laissé libre pendant l'actionnement de l'actuateur.

Selon un ou plusieurs modes de réalisation, les moyens d'orientation sont adaptés pour orienter l'au moins une roue de l'objet roulant dans une direction sensiblement perpendiculaire à la direction longitudinale du châssis du système de propulsion.

Selon un ou plusieurs modes de réalisation, les moyens de préhension comprennent au moins un jeu de deux éléments de saisie dont les axes principaux sont sensiblement perpendiculaires à la direction longitudinale du châssis, les deux éléments de saisie étant adaptés pour capturer la roue de l'objet roulant.

Selon un ou plusieurs modes de réalisation, les moyens d'immobilisation comprennent un bras d'arrimage sensiblement horizontal, portant un élément d'immobilisation à une de ses extrémités.

Selon un ou plusieurs modes de réalisation, le bras de longueur variable est adapté pour faire varier la distance entre l'au moins une roue non entrainée et le bras d'arrimage.

Selon un ou plusieurs modes de réalisation, le bras de longueur variable est adapté pour que la distance entre l'au moins une roue non entraînée et le bras d'arrimage puisse être modifiée d'au moins 150 mm.

Selon un ou plusieurs modes de réalisation, le bras de longueur variable est adapté pour que la distance entre l'au moins une roue non entraînée et le bras d'arrimage puisse être modifiée entre 200 et 500 mm.

Selon un ou plusieurs modes de réalisation des aspects précités, les moyens de levage comprennent une structure articulée en partie centrale du châssis entre l'au moins une roue motorisée et l'au moins une roue non motorisée.

Selon un ou plusieurs modes de réalisation des aspects précités, lorsque ledit système de propulsion est attelé à un objet roulant, lesdites roues non entraînées sont disposées sous ledit objet roulant.

Conformément à une mise en oeuvre des aspects précités, lorsque ledit système de propulsion est attelé à un objet roulant, ladite roue entrainée par ladite machine électrique est disposée à l'extérieur dudit objet roulant.

Selon un ou plusieurs modes de réalisation des aspects précités, lorsque ledit système de propulsion est attelé à un objet roulant, ladite roue entraînée par ladite machine électrique est disposée sous l'objet roulant.

Selon un ou plusieurs modes de réalisation des aspects précités, ledit châssis comporte une plateforme, notamment pour le support d'un utilisateur.

Selon un ou plusieurs modes de réalisation des aspects précités, lorsque ledit système de propulsion est attelé à un objet roulant, ladite plateforme est disposée sous ledit objet roulant.

Selon un ou plusieurs modes de réalisation des aspects précités, ledit guidon est articulé par rapport au châssis autour d'un axe horizontal.

Selon un ou plusieurs modes de réalisation des aspects précités, ledit guidon est articulé par rapport à un axe d'orientation de ladite roue entraînée autour d'un axe horizontal, ledit axe d'orientation étant en rotation par rapport au châssis autour d'un axe vertical.

Selon un ou plusieurs modes de réalisation des aspects précités, lesdites roues non entraînées sont des roues orientables autour d'un axe vertical, de préférence des roues décentrées orientables.

Selon un ou plusieurs modes de réalisation des aspects précités, lesdites roues non entraînées comprennent un moyen de blocage directionnel.

Selon un ou plusieurs modes de réalisation des aspects précités, ledit système de propulsion comprend trois ou quatre roues.

Selon un ou plusieurs modes de réalisation des aspects précités, ledit objet roulant est un lit roulant, un chariot, un meuble roulant, un fauteuil roulant.

Selon un ou plusieurs modes de réalisation des aspects précités, ledit guidon comprend des moyens de contrôle de ladite machine électrique et/ou desdits moyens d'attelage.

Selon un ou plusieurs modes de réalisation des aspects précités, ladite roue entraînée par ladite machine électrique est disposée à une extrémité dudit châssis opposée à l'extrémité dudit châssis sur laquelle sont disposées lesdites roues non entraînée.

Selon un cinquième aspect, l'invention concerne un attelage comprenant un objet roulant et un système de propulsion électrique selon au moins un des aspects précités, l'objet roulant étant attelé au système de propulsion électrique par lesdits moyens d'attelage.

Selon un ou plusieurs modes de réalisation, le système de propulsion électrique comprend des moyens de blocage directionnel adaptés pour : débloquer la rotation de la roue non motorisée autour d'un axe vertical pour actionner le bras de longueur variable; et/ou bloquer la rotation de la roue non motorisée autour de l'axe vertical pour déplacer l'attelage.

Selon un sixième aspect, l'invention concerne un procédé d'attelage d'un objet roulant à un système de propulsion électrique selon au moins un des aspects précités, comprenant au moins une des étapes suivantes : contacter la roue de l'objet roulant avec au moins un élément de saisie ; orienter la roue de l'objet roulant dans une direction sensiblement perpendiculaire à la direction longitudinale du châssis du système de propulsion ; immobiliser la roue de l'objet roulant avec l'élément d'immobilisation par actuation du bras d'arrimage ; et faire varier la distance entre l'au moins une roue entraînée et l'au moins une roue non entrainée au moyen d'au moins un bras de longueur variable.

D'autres caractéristiques et avantages de l'invention, apparaîtront à la lecture de la description ci-après d'exemples non limitatifs de réalisations, en se référant aux figures annexées et décrites ci-après.

### Liste des figures

La figure 1 est une vue de dessus d'un système de propulsion selon un ou plusieurs modes de réalisation de l'invention.
La figure 2 est une vue de côté d'un système de propulsion selon un ou plusieurs modes de réalisation de l'invention.
La figure 3 est une vue de côté d'un système de propulsion selon un ou plusieurs modes de réalisation de l'invention.
La figure 4 est une vue de dessus d'un système de propulsion selon un ou plusieurs modes de réalisation attelé à un objet roulant.
La figure 5 est une vue de côté d'un système de propulsion selon un ou plusieurs modes de réalisation de l'invention pour le déplacement d'un utilisateur.
La figure 6A est une vue de dessus d'un système de propulsion selon un ou plusieurs modes de réalisation de l'invention pendant la préhension d'une roue d'un objet roulant.
La figure 6B est une vue de dessus d'un système de propulsion selon un ou plusieurs modes de réalisation de l'invention pendant la rotation de roues d'un objet roulant selon un axe de pivot vertical.
La figure 6C est une vue de dessus d'un système de propulsion selon un ou plusieurs modes de réalisation de l'invention en fin de rotation de roues d'un objet roulant selon un axe de pivot vertical.
La figure 6D est une vue de dessus d'un système de propulsion selon un ou plusieurs modes de réalisation de l'invention pendant l'immobilisation de roues d'un objet roulant.
La figure 7A est une vue de dessus d'un système de propulsion selon un ou plusieurs modes de réalisation de l'invention pendant la préhension d'une roue d'un objet roulant.
La figure 7B est une vue de dessus d'un système de propulsion selon un ou plusieurs modes de réalisation de l'invention pendant la rotation de roues d'un objet roulant selon un axe de pivot vertical.
La figure 7C est une vue de dessus d'un système de propulsion selon un ou plusieurs modes de réalisation de l'invention en fin de rotation de roues d'un objet roulant selon un axe de pivot vertical.
La figure 7D est une vue de dessus d'un système de propulsion selon un ou plusieurs modes de réalisation de l'invention pendant l'immobilisation de roues d'un objet roulant.
La figure 8A est une vue de dessus d'un système de propulsion selon un ou plusieurs modes de réalisation de l'invention pendant la préhension d'une roue d'un objet roulant.
La figure 8B est une vue de dessus d'un système de propulsion selon un ou plusieurs modes de réalisation de l'invention en fin de rotation de roues d'un objet roulant selon un axe de pivot vertical.
La figure 8C est une vue de dessus d'un système de propulsion selon un ou plusieurs modes de réalisation de l'invention pendant l'immobilisation de roues d'un objet roulant.
La figure 9A est une vue de dessus d'un système de propulsion selon un ou plusieurs modes de réalisation de l'invention pendant la préhension d'une roue d'un objet roulant.
La figure 9B est une vue de dessus d'un système de propulsion selon un ou plusieurs modes de réalisation de l'invention en fin de rotation de roues d'un objet roulant selon un axe de pivot vertical.
La figure 9C est une vue de dessus d'un système de propulsion selon un ou plusieurs modes de réalisation de l'invention pendant l'immobilisation de roues d'un objet roulant.
La figure 10A est une vue arrière des moyens d'attelage par préhension et immobilisation interne d'un système de propulsion selon un ou plusieurs modes de réalisation de l'invention avant la séquence d'immobilisation des roues d'un objet roulant.
La figure 10B est une vue arrière des moyens d'attelage par préhension et immobilisation interne d'un système de propulsion selon un ou plusieurs modes de réalisation de l'invention après la séquence d'immobilisation des roues d'un objet roulant.
La figure 10C est une vue arrière des moyens d'attelage par préhension et immobilisation externe d'un système de propulsion selon un ou plusieurs modes de réalisation de l'invention après la séquence d'immobilisation des roues d'un objet roulant.
La figure 11A est une vue arrière des moyens d'attelage par préhension et immobilisation interne d'un système de propulsion selon un ou plusieurs modes de réalisation de l'invention après la séquence d'immobilisation des roues d'un objet roulant orientées vers la gauche.
La figure 11B est une vue arrière des moyens d'attelage par préhension et immobilisation interne d'un système de propulsion selon un ou plusieurs modes de réalisation de l'invention après la séquence d'immobilisation des roues d'un objet roulant orientées vers la droite.
La figure 11C est une vue arrière des moyens d'attelage par préhension et immobilisation interne d'un système de propulsion selon un ou plusieurs modes de réalisation de l'invention après la séquence d'immobilisation des roues d'un objet roulant orientées en opposition.
La figure 11D est une vue arrière des moyens d'attelage par préhension et immobilisation interne d'un système de propulsion selon un ou plusieurs modes de réalisation de l'invention après la séquence d'immobilisation des roues d'un objet roulant orientées en vis-à-vis.
La figure 12A est une vue 3D des moyens d'attelage d'un système de propulsion selon un ou plusieurs modes de réalisation de l'invention.
La figure 12B est une vue 3D des moyens d'attelage d'un système de propulsion selon un ou plusieurs modes de réalisation de l'invention.
La figure 12C est une vue 3D des moyens d'attelage d'un système de propulsion selon un ou plusieurs modes de réalisation de l'invention.
La figure 12D est une vue 3D des moyens d'attelage d'un système de propulsion selon un ou plusieurs modes de réalisation de l'invention.
La figure 12E est une vue 3D des moyens d'attelage d'un système de propulsion selon un ou plusieurs modes de réalisation de l'invention.
La figure 12F est une vue 3D des moyens d'attelage d'un système de propulsion selon un ou plusieurs modes de réalisation de l'invention.
La figure 12G est une vue 3D des moyens d'attelage d'un système de propulsion selon un ou plusieurs modes de réalisation de l'invention comprenant une portion interne de point d'appui.
La figure 12H est une vue 3D des moyens d'attelage par préhension externe d'un système de propulsion selon un ou plusieurs modes de réalisation de l'invention comprenant un élément de butée disposé sur un bras d'arrimage.
La figure 121 est une vue 3D des moyens d'attelage par préhension externe d'un système de propulsion selon un ou plusieurs modes de réalisation de l'invention comprenant un élément de butée disposé sur un élément de saisie.

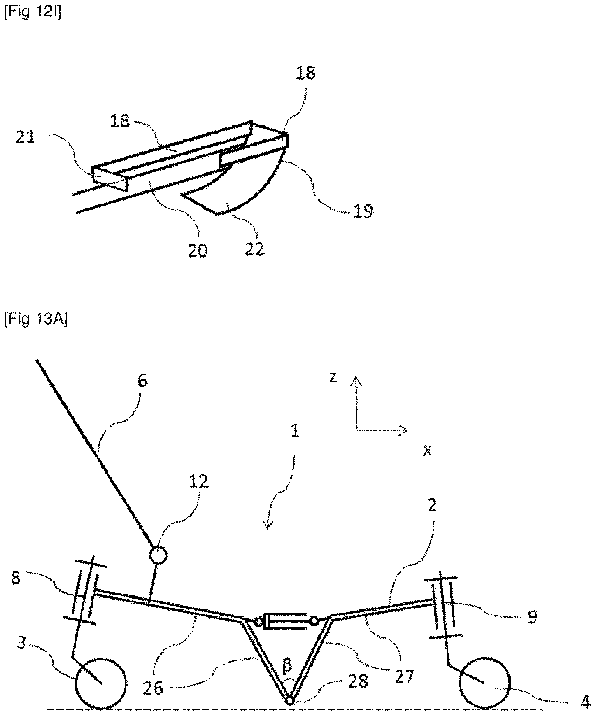

La figure 13A est une vue de côté des moyens de levage d'un système de propulsion selon un ou plusieurs modes de réalisation de l'invention en position basse.

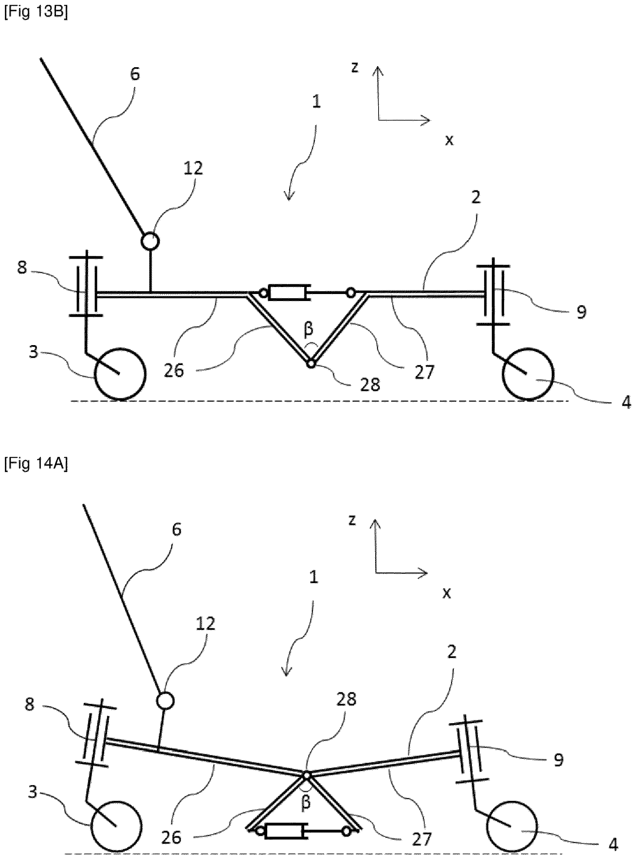

La figure 13B est une vue de côté des moyens de levage d'un système de propulsion selon un ou plusieurs modes de réalisation de l'invention en position haute.
La figure 14A est une vue de côté des moyens de levage d'un système de propulsion selon un ou plusieurs modes de réalisation de l'invention en position basse.

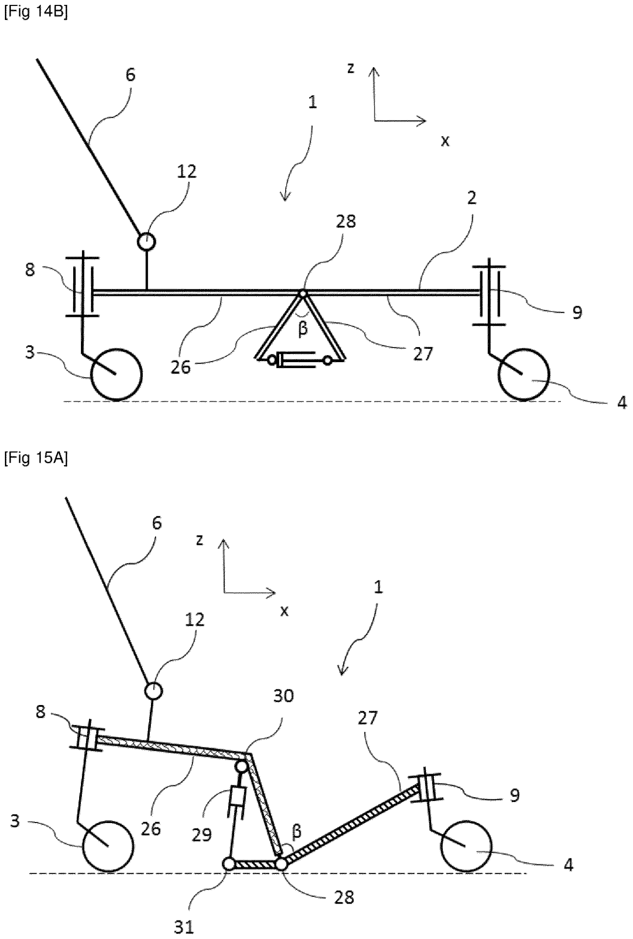

La figure 14B est une vue de côté des moyens de levage d'un système de propulsion selon un ou plusieurs modes de réalisation de l'invention en position haute.
La figure 15A est une vue de côté des moyens de levage d'un système de propulsion selon un ou plusieurs modes de réalisation de l'invention en position basse.

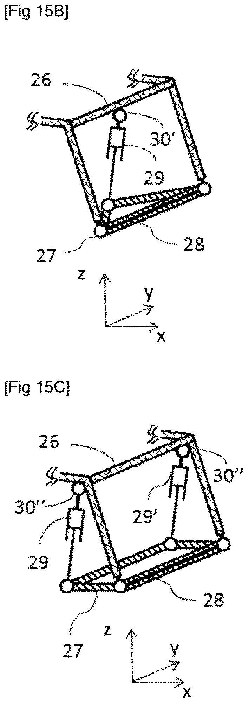

La figure 15B est une vue 3D d'un mode de réalisation des moyens de levage de la figure 15A.
La figure 15C est une vue 3D d'un mode de réalisation des moyens de levage de la figure 15A.

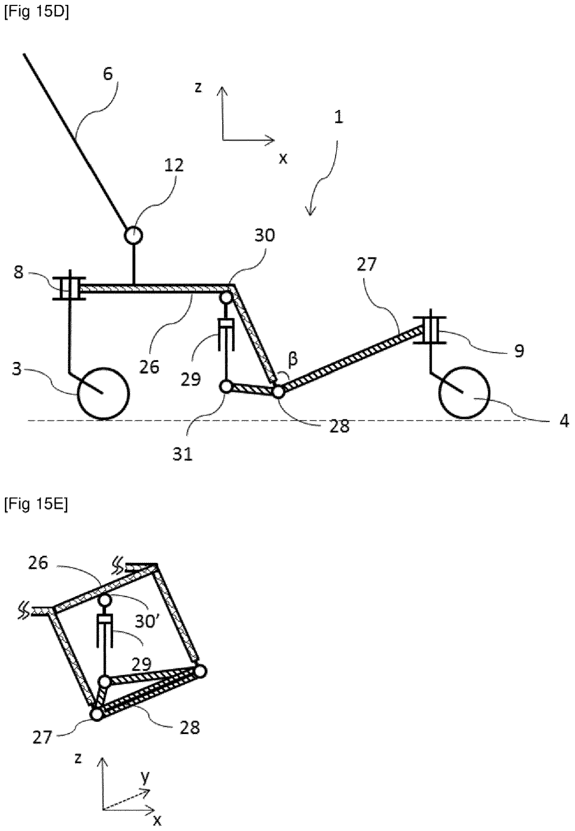

La figure 15D est une vue de côté des moyens de levage d'un système de propulsion selon un ou plusieurs modes de réalisation de l'invention en position haute.
La figure 15E est une vue 3D d'un mode de réalisation des moyens de levage de la figure 15D.

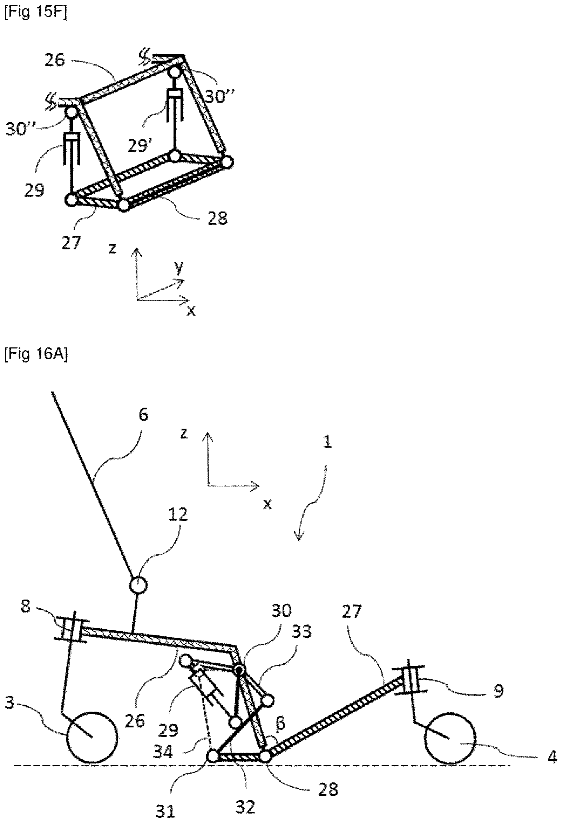

La figure 15F est une vue 3D d'un mode de réalisation des moyens de levage de la figure 15D.
La figure 16A est une vue de côté des moyens de levage d'un système de propulsion selon un ou plusieurs modes de réalisation de l'invention en position basse.

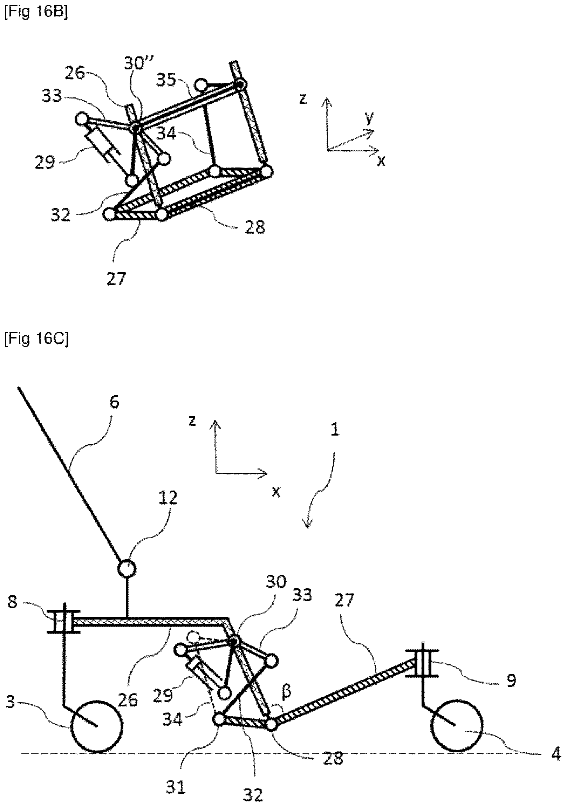

La figure 16B est une vue 3D d'un mode de réalisation des moyens de levage de la figure 16A.
La figure 16C est une vue de côté des moyens de levage d'un système de propulsion selon un ou plusieurs modes de réalisation de l'invention en position haute.

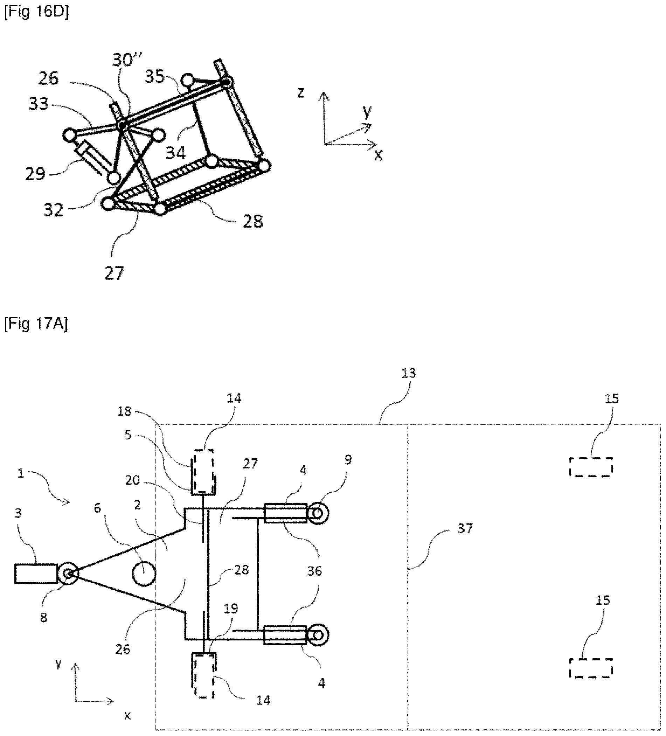

La figure 16D est une vue 3D d'un mode de réalisation des moyens de levage de la figure 16C.
La figure 17A est une vue de dessus des moyens d'aide à la conduite pour moyens d'attelage par préhension et immobilisation interne d'un système de propulsion selon un ou plusieurs modes de réalisation de l'invention en position rétractée.

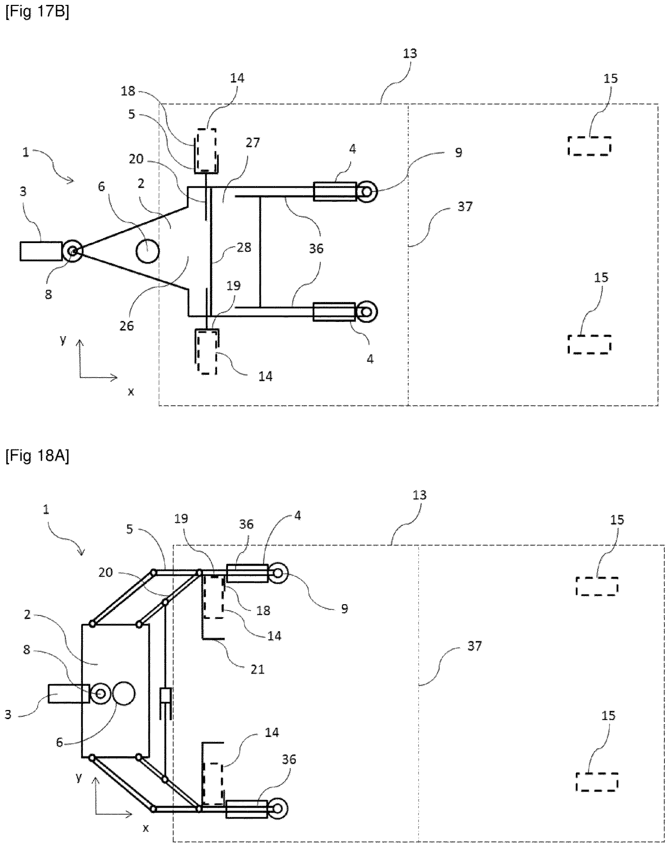

La figure 17B est une vue de dessus des moyens d'aide à la conduite pour moyens d'attelage par préhension et immobilisation interne d'un système de propulsion selon un ou plusieurs modes de réalisation de l'invention en position allongée.
La figure 18A est une vue de dessus des moyens d'aide à la conduite pour moyens d'attelage par préhension externe d'un système de propulsion selon un ou plusieurs modes de réalisation de l'invention en position rétractée.

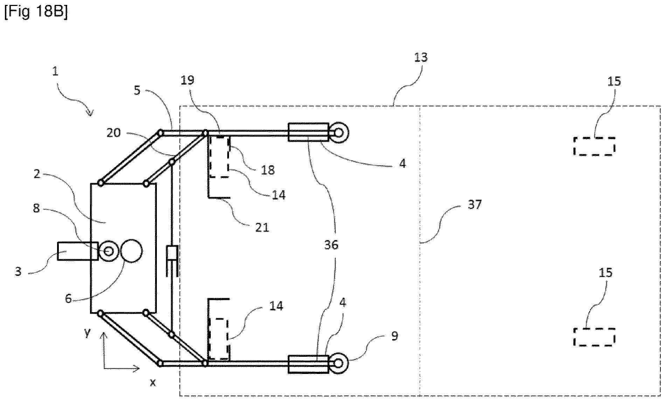

La figure 18B est une vue de dessus des moyens d'aide à la conduite pour moyens d'attelage par préhension externe d'un système de propulsion selon un ou plusieurs modes de réalisation de l'invention en position allongée.

### Description des modes de réalisation

La présente invention concerne un système de propulsion électrique pour un objet roulant. On appelle système de propulsion électrique un système amovible permettant d'assister le déplacement de l'objet roulant, afin de limiter les efforts requis pour le déplacement de l'objet roulant. Ce système de propulsion électrique comporte au moins une machine électrique pour son entraînement. Un objet roulant est un objet qui comporte au moins deux roues afin de le déplacer.

L'objet roulant peut être de toute forme, notamment un lit roulant, tel que notamment ceux utilisés dans les hôpitaux, un fauteuil roulant, un chariot, tel qu'utilisé pour la logistique, par exemple la logistique hospitalière ou la logistique commerciale (selon un exemple un chariot de supermarché), tout meuble roulant. Un tel objet roulant comporte au moins deux roues, de préférence trois ou quatre. Avantageusement, au moins une roue, de préférence, deux roues de l'objet roulant sont des roues folles, en d'autres termes ce sont des roues décentrées orientables autour d'un axe vertical. L'objet roulant est de préférence non motorisé.

Le système de propulsion électrique selon l'invention comporte :
- Un châssis muni d'au moins une roue motorisée, c'est-à-dire une roue entraînée par une machine électrique, et au moins une roue supplémentaire, de préférence deux, préférablement non motorisée, c'est-à-dire non entraînée(s) par une machine électrique,
- Un guidon, permettant la manipulation, le déplacement et l'orientation du système de propulsion par un utilisateur,
- Des moyens d'attelage du système de propulsion à un objet roulant, les moyens d'attelage comportent des moyens de préhension, d'orientation, d'immobilisation et de levage d'au moins une roue, de préférence plusieurs roues, et de manière préférée deux roues, de l'objet roulant, de préférence deux roues de l'objet roulant, en d'autres termes, les moyens d'attelage sont configurés pour capturer (e.g. saisir, agripper, lover), orienter, immobiliser et lever au moins une roue de l'objet roulant.

L'attelage est donc réalisé par au moins une roue de l'objet roulant, de préférence par au moins une roue folle de l'objet roulant. L'objet roulant ne nécessite donc pas d'être adapté pour le système de propulsion électrique, ce qui rend le système de propulsion électrique universel à différents objets roulants.

Selon un ou plusieurs modes de réalisation de l'invention, le système de propulsion électrique peut être configuré pour que la ou les roues non motorisées soient situées sous l'objet roulant (soit en zone interne aux roues de l'objet roulant, soit en zone externe aux roue de l'objet roulant et restant sous l'objet roulant), lorsque le système de propulsion électrique est attelé à l'objet roulant. Ainsi, une partie du système de propulsion électrique ne dépasse pas de l'objet roulant, ce qui facilite son utilisation dans les espaces réduits.

Selon un ou plusieurs modes de réalisation, le système de propulsion électrique peut être configuré pour que la roue motorisée soit située à l'extérieur de l'objet roulant, selon la direction longitudinale du châssis, lorsque le système de propulsion électrique est attelé à l'objet roulant. En d'autres termes, la partie du châssis qui supporte la roue motorisée dépasse de l'objet roulant selon la direction longitudinale du châssis, lorsque le système de propulsion électrique est attelé à l'objet roulant.

Selon un ou plusieurs modes de réalisation, le système de propulsion électrique peut être configuré pour que la roue motorisée soit située sous l'objet roulant, lorsque le système de propulsion électrique est attelé à l'objet roulant. Ainsi, une partie du système de propulsion électrique ne dépasse pas de l'objet roulant, ce qui facilite son utilisation dans les espaces réduits.

Selon un ou plusieurs modes de réalisation, le système de propulsion peut être configuré pour que la majeure partie du système de propulsion soit située sous l'objet roulant, lorsque le système de propulsion est attelé à l'objet roulant. Seule la partie du châssis correspondant à la roue motorisée et le guidon dépassent de l'objet roulant selon la direction longitudinale du châssis.

Selon un ou plusieurs modes de réalisation, le système de propulsion peut comprendre trois ou quatre roues. Lorsque le système de propulsion comporte trois roues, une unique roue peut être entraînée par une machine électrique. Lorsque le système de propulsion comporte quatre roues, deux roues peuvent être entraînées par une machine électrique.

Selon un ou plusieurs modes de réalisation, la roue motorisée peut être disposée à une extrémité longitudinale du châssis, et les roues non motorisées peuvent être disposées à l'autre extrémité longitudinale du châssis.

Le châssis peut être réalisé par un ensemble mécanosoudé.

Selon un ou plusieurs modes de réalisation, les moyens d'attelage sont liés au châssis entre la roue motorisée et la ou les roues non motorisées. Ainsi, l'encombrement longitudinal du système de propulsion est limité. Selon un ou plusieurs modes de réalisation, les moyens d'attelage sont supportés par les roues non motorisées. Ainsi, la stabilité des moyens d'attelage est augmentée.

De préférence, les moyens d'attelage peuvent comprendre des moyens de réglage selon l'axe longitudinal du châssis. De ce fait, leur position longitudinale sur le châssis peut varier, ce qui permet d'améliorer la flexibilité du système de propulsion électrique amovible à différents objets roulants. Cela permet également d'améliorer la compacité du système. Les moyens de réglage peuvent être avantageusement commandés par un moyen de pilotage, tel qu'une télécommande ou un téléphone intelligent. Un contrôleur peut également être utilisé par exemple pour recevoir des informations de l'utilisateur (déplacement des moyens d'attelage, ou d'un seul des moyens d'attelage, vers l'avant ou vers l'arrière du système) et commander la mise en oeuvre du réglage des moyens d'attelage.

Les moyens de préhension de la roue de l'objet roulant permettent la saisie de la roue. Par exemple, ces moyens de préhension peuvent comprendre un système de pince, un système de coincement, des moyens magnétiques, des moyens adhésifs ou tout système analogue. De manière avantageuse, les moyens de préhension peuvent être déplaçables de manière à s'adapter à toutes dimensions de roues et à tout écartement de roue. Le déplacement des moyens de préhension peut être mis en oeuvre au moyen d'un ou plusieurs vérins, par exemple de vérin électrique, de système vis écrous, de système pignon-crémaillère ou tout moyen analogue.

Selon un ou plusieurs modes de réalisation, les moyens de préhension comprennent un premier jeu d'au moins deux éléments de saisie, tels que des tiges ou des plaques (e.g. métalliques), préférablement sensiblement horizontales, dont les axes principaux sont sensiblement parallèles l'un de l'autre (de préférence dans un plan sensiblement horizontal) et sont perpendiculaires à la direction longitudinale du châssis. Selon un ou plusieurs modes de réalisation, les éléments de saisie sont sensiblement horizontaux et perpendiculaires à la direction longitudinale du châssis. Dans la présente demande, un axe principal correspond par défaut à l'axe traversant la partie médiane de l'élément considéré selon sa dimension la plus grande. Selon un ou plusieurs modes de réalisation, les deux éléments de saisie sont adaptés pour permettre l'introduction d'une roue de l'objet roulant entre lesdits éléments de saisie de sorte que l'axe de rotation de la roue soit sensiblement perpendiculaire aux axes principaux des deux éléments de saisie. Selon un ou plusieurs modes de réalisation, la distance entre les deux éléments de saisie est prédéterminée pour être : strictement inférieure au diamètre de la roue de l'objet roulant, tel que moins de 0,8 fois, préférablement entre 0,3 et 0,5 fois, le diamètre de la roue de l'objet roulant ; et supérieure au égale à l'épaisseur de la roue de l'objet roulant, tel que entre 1 et 1,5 fois, préférablement entre 1 et 1,2 fois, l'épaisseur de la roue de l'objet roulant. Selon un ou plusieurs modes de réalisation, un élément de saisie est plus long que l'autre élément de saisie formant le jeu d'éléments de saisie, dans la direction sensiblement perpendiculaire à la direction longitudinale dudit châssis. Selon un ou plusieurs modes de réalisation, l'élément de saisie disposé du côté sensiblement opposé à la direction d'introduction du système de propulsion électrique sous l'objet roulant, est plus long que l'autre élément de saisie formant le jeu d'éléments de saisie. Préférablement, l'élément de saisie disposé du côté de la roue motorisée, est plus long que l'élément de saisie disposé du côté de la ou des roues non motorisées. Selon un ou plusieurs modes de réalisation, l'élément de saisie disposé du côté de la roue motorisée, est plus long de 1 à 2,5 fois, tel que de 1,5 à 2 fois, que l'élément de saisie disposé du côté de la roue ou des roues non motorisées. Selon un ou plusieurs modes de réalisation, un élément de butée est disposé du côté intérieur des moyens d'attelage par rapport aux éléments de saisie (dans une direction sensiblement parallèle à la direction longitudinale dudit châssis), l'élément de butée étant pourvu pour guider la roue de l'objet roulant de sorte que la dite roue vienne en butée contre l'élément de saisie disposé du côté de la roue motorisée. Selon un ou plusieurs modes de réalisation, la distance entre l'élément de butée et un élément de saisie est prédéterminée pour être strictement supérieure au diamètre de la roue de l'objet roulant. Selon un ou plusieurs modes de réalisation, la distance entre l'élément de butée et l'élément de saisie disposé du côté de la roue non motorisée est prédéterminée pour être strictement supérieure au diamètre de la roue de l'objet roulant. Selon un ou plusieurs modes de réalisation, les moyens de préhension comprennent une pièce mobile connectée à au moins un élément de saisie au travers d'un axe de rotation perpendiculaire à l'axe principal de l'élément de saisie, la pièce mobile étant adaptée pour tourner autour de l'axe de rotation et prolonger l'élément de saisie selon l'axe principal de l'élément de saisie, notamment lorsque la roue de l'objet roulant est introduite entre les éléments de saisie.

Selon un ou plusieurs modes de réalisation, les moyens d'attelage comprennent en outre des moyens d'orientation de la roue saisie (par les moyens de préhension) dans une direction sensiblement perpendiculaire à la direction longitudinale du châssis du système de propulsion (autrement dit, la roue de l'objet roulant est placée dans une direction parallèle à l'axe latéral du châssis). La direction longitudinale du châssis est définie par la direction qui relie la roue motorisée, à la roue non motorisée. La direction longitudinale correspond à la direction principale de déplacement du système de propulsion électrique. Préférablement, on entend par sensiblement perpendiculaire, une direction formant un angle compris entre 80 et 100° par rapport à la direction longitudinale. Ainsi, lors de la propulsion de l'objet roulant, au moins une roue de l'objet roulant est saisie, orientée dans une direction perpendiculaire à la direction longitudinale du châssis, immobilisée et levée. De cette manière, les moyens d'attelage agissent dans le sens de l'épaisseur des roues de l'objet roulant et non dans le sens du diamètre des roues. Cela concourt à ce que les moyens d'attelage possèdent des dimensions latérales réduites par rapport aux dimensions latérales des systèmes de propulsion de l'art antérieur (par exemple ceux décrits dans les demandes de brevet WO 2012/171079 et WO 2013/156030), ce qui facilite son utilisation dans les espaces réduits, tels que les couloirs et les ascenseurs. Les moyens d'orientation de la roue de l'objet roulant peuvent être mis en oeuvre par le déplacement des moyens de préhension de la roue.

Des moyens d'immobilisation de la roue de l'objet roulant permettent d'immobiliser (bloquer, arrimer) la roue saisie. Par exemple, les moyens d'immobilisation peuvent comprendre un système de pince, un système de coincement, des moyens magnétiques, des moyens adhésifs ou tout système analogue. De manière avantageuse, les moyens d'immobilisation peuvent être déplaçables de manière à s'adapter à toutes dimensions de roues et à tout écartement de roue. Le déplacement des moyens d'immobilisation peut être mis en oeuvre au moyen d'un ou plusieurs vérins, par exemple de vérin électrique, de système vis écrous, de système pignon-crémaillère ou tout moyen analogue.

Selon un ou plusieurs modes de réalisation, les moyens d'immobilisation sont compacts et simples et sont conçus pour s'arrimer aux roues de l'objet roulant lorsque ces dernières sont orientées perpendiculairement à l'axe longitudinal du châssis (les roues de l'objet roulant peuvent être orientées dans le même sens que ce soit vers un côté au l'autre, mais elles peuvent aussi être en opposition ou en vis-à-vis).

Selon un ou plusieurs modes de réalisation, les moyens d'immobilisation comprennent un premier bras et un deuxième bras dits « d'arrimage » sensiblement horizontaux, portant chacun un élément d'immobilisation à une de ses extrémités. Selon un ou plusieurs modes de réalisation, chaque élément d'immobilisation est prolongé par deux éléments de saisie (moyens de préhension utilisés pour les séquences de préhension et d'orientation). Selon un ou plusieurs modes de réalisation, les bras d'arrimage comprennent des axes principaux dits « axes de déplacement » sensiblement parallèles l'un de l'autre, et préférablement sensiblement coaxiaux. Selon un ou plusieurs modes de réalisation, les deux bras d'arrimage sont disposés en opposition sur le système de propulsion électrique. Selon un ou plusieurs modes de réalisation, chaque bras d'arrimage est déplaçable en rotation autour d'un axe de pivot vertical. Selon un ou plusieurs modes de réalisation, l'axe principal d'un bras d'arrimage forme par rapport à l'axe longitudinal du châssis, un angle compris entre 70° et 45° en position écartée (i.e., avant la séquence d'immobilisation), et un angle compris entre 45° et 20° en position serrée (i.e., après la séquence d'immobilisation). Selon un ou plusieurs modes de réalisation, l'axe principal d'un bras d'arrimage forme par rapport à l'axe longitudinal du châssis, un angle sensiblement supérieur à 45° en position écartée (i.e., avant la séquence d'immobilisation), et un angle sensiblement inférieur à 45° en position serrée (i.e., après la séquence d'immobilisation).

Selon un ou plusieurs modes de réalisation, l'élément d'immobilisation est disposé entre deux éléments de saisie, vu de dessus. Selon un ou plusieurs modes de réalisation, l'élément d'immobilisation comprend un élément de support (pièce plate, inclinée ou courbée adaptée pour passer sous la roue de l'objet roulant), par exemple en forme de cuillère, de pelle ou d'équerre, adaptée notamment pour supporter puis immobiliser la roue de l'objet roulant par actuation du bras d'arrimage. Selon un ou plusieurs modes de réalisation, l'élément de support comprend une courbe adaptée pour passer sous la roue de l'objet roulant. Selon un ou plusieurs modes de réalisation, l'élément de support comprend une partie sensiblement horizontale, adaptée notamment pour passer sous la roue de l'objet roulant, et une partie sensiblement verticale, adaptée notamment pour venir en contact avec ladite roue au moment de l'actuation des bras d'arrimage.

Selon un ou plusieurs modes de réalisation, chaque élément d'immobilisation est orienté vers l'extérieur selon un axe perpendiculaire à la direction longitudinale du châssis (éléments d'immobilisation disposés en opposition). Selon un ou plusieurs modes de réalisation, les bras d'arrimage sont écartés l'un de l'autre au moyen de systèmes adaptés tels qu'un ou des vérins, jusqu'à ce que les roues de l'objet roulant soient immobilisées par les éléments d'immobilisation. Selon un ou plusieurs modes de réalisation, les éléments d'immobilisation sont implantés en vis-à-vis sur le système de propulsion électrique. Selon un ou plusieurs modes de réalisation, les bras d'arrimage sont rapprochés l'un de l'autre au moyen de systèmes adaptés tels qu'un ou des vérins, jusqu'à ce que les roues de l'objet roulant soient immobilisées par les éléments d'immobilisation.

Selon un ou plusieurs modes de réalisation, chaque bras d'arrimage est déplaçable par rapport au châssis (selon l'axe perpendiculaire à la direction longitudinale du châssis, ou par rotation autour d'un axe de pivot vertical) au moyen d'un composant de déplacement, tel qu'un vérin, lui-même relié audit bras d'arrimage et audit châssis. Selon un ou plusieurs modes de réalisation, chaque bras d'arrimage est mis en mouvement l'un par rapport à l'autre au moyen d'un composant tel qu'un vérin, lui-même relié à chacun desdits bras d'arrimage, indépendamment de la position du châssis. Par exemple, lorsqu'un premier élément d'immobilisation d'un premier bras d'arrimage entre en contact puis en butée avec une première roue de l'objet roulant, c'est le deuxième élément d'immobilisation du deuxième bras d'arrimage qui se déplace jusqu'à entrer en contact puis en butée avec une deuxième roue de l'objet roulant. Selon un ou plusieurs modes de réalisation, les bras d'arrimage sont mis en mouvement l'un indépendamment de l'autre au moyen de composants tel que des vérins, chaque vérin étant relié à un bras d'arrimage et au châssis.

Compacts et simples d'utilisation, les moyens de levage de la roue ou des roues permettent de surélever la roue ou les roues de l'objet roulant, de manière à ce que cette roue de l'objet roulant ne touche plus le sol. La masse de l'objet roulant supportée par cette roue est alors reportée sur le système de propulsion électrique. Cela permet notamment d'apporter l'adhérence nécessaire à la motricité de la roue motorisée du système de propulsion électrique. Dans un même temps, la solidarisation de l'objet roulant au système de propulsion électrique apporte la stabilité nécessaire au fonctionnement du système de propulsion électrique d'autant plus utile que la largeur de voie du système de propulsion électrique est réduite Le levage peut être mis en oeuvre au moyen d'un ou plusieurs vérins, par exemple de vérin électrique, de système vis écrous, de système pignon-crémaillère ou tout moyen analogue.

Selon un ou plusieurs modes de réalisation, les moyens de levage comprennent une structure articulée en partie centrale du châssis (e.g. entre l'au moins une roue motorisée et l'au moins une roue non motorisée). La structure articulée comprend d'une part, une première portion de châssis dite « portion motrice » supportée par au moins une roue motorisée, la roue motorisée pouvant pivoter autour d'un axe vertical solidaire de ladite portion motrice, préférentiellement non concourant avec l'axe de rotation de la roue motorisée, et comprend d'autre part, une deuxième portion de châssis dite « portion non motorisée » supportée par au moins une roue non motorisée. Selon un ou plusieurs modes de réalisation, lesdites portions de châssis sont articulées l'une par rapport à l'autre autour d'un axe de rotation horizontal dit « axe d'articulation » sensiblement perpendiculaire à la direction longitudinale du châssis. Selon un ou plusieurs modes de réalisation, les éléments d'immobilisation sont disposés adjacent de l'axe de rotation. Selon un ou plusieurs modes de réalisation, les éléments d'immobilisation adaptés pour immobiliser la roue de l'objet roulant sont liés directement ou indirectement à l'axe d'articulation. Selon un ou plusieurs modes de réalisation, l'axe d'articulation est localisé adjacent des axes principaux des bras d'arrimage. Selon un ou plusieurs modes de réalisation, l'axe d'articulation est lié directement ou indirectement aux bras d'arrimage. Selon un ou plusieurs modes de réalisation, un premier actuateur tel qu'un vérin, relié à chacune des portions de châssis, permet de contrôler la position d'une portion de châssis par rapport à l'autre. En conséquence, le premier actuateur permet le contrôle de la hauteur de la partie centrale du châssis comprenant l'axe de rotation horizontal et les axes principaux des bras d'arrimage, et le contrôle de la distance entre les bras d'arrimage et le sol, et par conséquent, le levage des roues de l'objet roulant dans les moyens d'immobilisation.

Selon un ou plusieurs modes de réalisation, avant la mise en oeuvre de l'invention pour immobiliser et lever une ou des roues de l'objet roulant, une séquence préliminaire d'actionnement du premier actuateur peut être commandée de manière à provoquer un déplacement sensiblement vertical vers le sol de l'axe d'articulation présent entre les deux portions de châssis. Les axes de déplacement des bras d'arrimage étant situés dans une zone proche du dit axe d'articulation, les bras d'arrimage subissent aussi un déplacement vertical vers le sol. Avantageusement, cette séquence préliminaire permet de prédisposer les éléments d'immobilisation au plus près du sol pour faciliter la séquence d'immobilisation. Selon un ou plusieurs modes de réalisation, la séquence préliminaire peut être effectuée avant la séquence de préhension pour prédisposer les éléments de saisie à une hauteur par rapport au sol sensiblement égale à la hauteur par rapport au sol de l'axe de rotation des roues de l'objet roulant.

Selon un ou plusieurs modes de réalisation, le système de propulsion électrique peut réaliser la séquence d'étapes suivantes pour l'attelage : préhension de la roue de l'objet roulant, orientation de la roue ou des roues de l'objet roulant selon une direction perpendiculaire à la direction longitudinale du châssis, immobilisation de la roue ou des roues de l'objet roulant, et levage de la roue ou des roues de l'objet roulant.

Selon un ou plusieurs modes de réalisation, le système de propulsion électrique réalise la séquence de préhension en approchant les moyens de préhension d'une des roues de l'objet roulant jusqu'à l'introduction de la roue de l'objet roulant entre les deux éléments de saisie, l'axe de rotation de la roue de l'objet roulant étant perpendiculaire à l'axe principal des deux éléments de saisie. Selon un ou plusieurs modes de réalisation, la distance entre les éléments de saisie et le sol pendant la séquence préhension est entre 0,2 et 0,8 fois le diamètre de la roue de l'objet roulant, préférablement entre 0,3 et 0,7 fois le diamètre de la roue de l'objet roulant.

Selon un ou plusieurs modes de réalisation, le système de propulsion électrique réalise la séquence d'orientation en mettant en rotation la roue de l'objet roulant autour du point de contact sur le sol, en gardant sensiblement le contact entre les moyens de préhension et la roue de l'objet roulant. La mise en rotation par le système de propulsion électrique (ou par un mouvement manuel de l'utilisateur) de la roue de l'objet roulant autour de son point de contact avec le sol, elle-même liée à l'objet roulant par un axe de rotation vertical ne passant pas par le dit point de contact, a pour conséquence de provoquer un léger déplacement de l'objet roulant. Le déplacement de l'objet roulant provoque alors une rotation d'une deuxième roue de l'objet roulant autour de son point de contact avec le sol. La rotation de la deuxième roue est semblable à celle imposée à la première roue par le système de propulsion électrique (effet Caddy^{™}). La rotation du système de propulsion électrique est appliquée jusqu'à ce que ladite deuxième roue de l'objet roulant soit dans une direction sensiblement perpendiculaire à la direction longitudinale dudit châssis dudit système de propulsion. Selon un ou plusieurs modes de réalisation, la rotation du système de propulsion électrique est appliquée jusqu'à ce qu'un deuxième jeu de deux éléments de saisie entre en contact avec ladite deuxième roue de l'objet roulant, par exemple jusqu'à ce que l'élément de saisie disposé du côté de la roue motorisée du deuxième jeu de deux éléments entre en contact avec ladite deuxième roue de l'objet roulant. Selon un mode de réalisation, la séquence de rotation est commencée lorsqu'au moins un élément de saisie contacte la roue de l'objet roulant. Avantageusement, il n'est pas nécessaire que la roue de l'objet roulant soit saisie pour réaliser l'étape d'orientation ; il suffit par exemple qu'au moins un des éléments de saisie puisse guider la roue de l'objet roulant lors de la séquence de rotation. Lors de la séquence d'orientation, le mouvement directionnel des roues non motorisées de la structure est préférentiellement laissé libre.

Selon un ou plusieurs modes de réalisation, le système de propulsion électrique réalise la séquence d'immobilisation en positionnant les éléments d'immobilisation entre les roues (ou à l'extérieur des roues) de l'objet roulant, dans le même axe desdites roues à solidariser au système de propulsion électrique, et en étant sensiblement ou en quasi contact avec le sol. Selon un ou plusieurs modes de réalisation, la distance entre les éléments d'immobilisation et le sol pendant la séquence d'immobilisation est de moins de 0,2 fois le diamètre de la roue de l'objet roulant, préférablement entre 0 et 0,05 fois le diamètre de la roue de l'objet roulant. Selon un ou plusieurs modes de réalisation, le positionnement des éléments d'immobilisation entre les roues, ou à l'extérieur des roues, est atteint une fois la séquence d'orientation réalisée, étant donné que les éléments d'immobilisation sont disposés entre deux éléments de saisie, vu de dessus. Selon un ou plusieurs modes de réalisation, les bras d'arrimage sont écartés (ou rapprochés) l'un de l'autre (par translation le long d'axes horizontaux respectifs, ou par rotation autour d'axes verticaux respectifs) au moyen de systèmes adaptés (e.g. vérins), jusqu'à ce qu'un des élément d'immobilisation d'un bras d'arrimage arrive en contact puis en butée avec une roue de l'objet roulant, et que l'autre élément d'immobilisation de l'autre bras d'arrimage arrive en contact puis en butée avec l'autre roue de l'objet roulant. Selon un ou plusieurs modes de réalisation, les bras d'arrimage sont mis en mouvement l'un indépendamment de l'autre au moyen de composants tel que des vérins, chaque vérin étant relié à un bras d'arrimage et au châssis. Selon un ou plusieurs modes de réalisation, les bras d'arrimage sont mis en mouvement l'un avec l'autre au moyen de composants tel que des vérins, chaque vérin étant relié aux deux bras d'arrimage et est indépendant du châssis. Lors de la séquence d'immobilisation, le mouvement directionnel des roues non motorisées de la structure est préférentiellement laissé libre.

Selon un ou plusieurs modes de réalisation, le système de propulsion électrique réalise la séquence de levage en actionnant le premier actuateur de manière à provoquer un déplacement sensiblement vertical vers le haut de l'axe d'articulation en modifiant un angle entre les portions de châssis au niveau de l'axe d'articulation. Les axes de déplacement des bras d'arrimage étant situés dans une zone proche du dit axe d'articulation, les bras d'arrimage subissent aussi un déplacement de levage. Avantageusement, cette séquence de levage permet de lever les roues de l'objet roulant amarrées au système de propulsion électrique. Lors de la séquence de levage, le mouvement directionnel des roues non motorisées de la structure est préférentiellement laissé libre.

Selon un ou plusieurs modes de réalisation, le châssis peut comporter une plateforme. La plateforme peut servir pour le support de charge, en particulier d'un utilisateur. De préférence, cette plateforme est disposée au-dessus des roues non motorisées ou entre les roues non motorisées. Conformément à une variante de cette réalisation, le système de propulsion électrique est configuré pour que la plateforme soit située sous l'objet roulant lorsque le système de propulsion électrique est attelé à l'objet roulant, ce qui permet de réduire les dimensions du système de propulsion électrique. Pour ce mode de réalisation, la plateforme ne peut pas être utilisée comme support de charge lorsque le système de propulsion électrique est attelé à un objet roulant. Par exemple, la plateforme peut servir à un utilisateur pour utiliser le système de propulsion en tant que trottinette électrique, lorsque le système de propulsion électrique n'est pas attelé à un objet roulant, ce qui permet de faciliter les déplacements des utilisateurs, entre le déplacement de deux objets roulants Alternativement, la plateforme peut servir au déplacement de charge, lorsque le système de propulsion n'est pas attelé à un objet roulant.

Selon un ou plusieurs modes de réalisation de l'invention, le guidon peut être articulé par rapport au châssis selon un axe horizontal fixé au châssis. Cet axe horizontal peut être de préférence selon la direction latérale du châssis. Ainsi, le guidon peut pivoter autour d'un axe horizontal.

Pour un ou plusieurs modes de réalisation du positionnement du guidon, le guidon n'est solidaire d'aucune roue, et le déplacement du système de propulsion est réalisé de manière similaire au déplacement d'un chariot (par exemple comme pour un chariot de supermarché).

Selon un ou plusieurs modes de réalisation, la roue motorisée peut être une roue orientable par rapport au châssis selon un axe d'orientation vertical, préférentiellement non concourant à l'axe de rotation de la roue motorisée, et le guidon peut être articulé ou fixé à l'axe d'orientation vertical de la roue motorisée. En d'autres termes, la roue motorisée peut pivoter par rapport au châssis autour d'un axe d'orientation vertical, le pivotement autour de cet axe vertical pouvant être contrôlé par le déplacement du guidon. Cette réalisation correspond sensiblement au contrôle du déplacement d'un système de type transpalette.

Afin de faciliter le déplacement du système de propulsion électrique par un utilisateur, le guidon peut comprendre des moyens de contrôle, tels que des moyens de contrôle de la machine électrique et/ou des moyens de contrôle des moyens d'attelage. Les moyens de contrôle de la machine électrique permettent l'allumage, l'arrêt, le réglage de la vitesse et/ou du couple de l'assistance électrique. Les moyens de contrôle des moyens d'attelage permettent le contrôle des moyens de préhension pour la préhension de la roue ou des roues de l'objet roulant, le contrôle des moyens de levage de la roue ou des roues de l'objet roulant, et le contrôle des moyens d'orientation des roues de l'objet roulant. Ces contrôles peuvent consister en des déplacements des éléments constituant les moyens d'attelage.

Selon un ou plusieurs modes de réalisation de l'invention, le guidon peut être télescopique, repliable et/ou amovible, de manière à faciliter le rangement du système de propulsion électrique en limitant son encombrement. Cela peut permettre aussi de limiter l'encombrement du système de propulsion attelé à un objet roulant dans un espace réduit tel qu'un ascenseur.

Selon un ou plusieurs modes de réalisation, lorsque le système de propulsion est attelé à l'objet roulant, le contrôle du système de propulsion ne se fait pas nécessairement par le guidon, le contrôle peut être réalisé par les moyens de contrôle de l'objet roulant, par exemple une poignée, un guidon ou analogue de l'objet roulant.

Le système de propulsion électrique peut comporter en outre une batterie électrique pour l'alimentation de la machine électrique. La batterie électrique peut être placée sur ou sous le châssis, par exemple à l'extrémité longitudinale du châssis à proximité de la roue motorisée, ou à l'extrémité longitudinale du châssis à proximité des roues non motorisées. Alternativement, la batterie peut être placée sur le guidon. De plus, la batterie peut être amovible afin de faciliter sa recharge ou son remplacement. Alternativement, la batterie peut ne pas être amovible.

Selon un ou plusieurs modes de réalisation, les roues non motorisées peuvent être des roues folles, c'est-à-dire des roues décentrées orientables autour d'un axe vertical. En d'autres termes, les roues non motorisées peuvent pivoter par rapport au châssis autour d'un axe d'orientation vertical, et l'axe de rotation de la roue peut être décentré (non concourant) par rapport à l'axe d'orientation vertical.

Selon un ou plusieurs modes de réalisation, les roues non motorisées peuvent être des roues orientables autour d'un axe vertical de manière non décentrées. En d'autres termes, les roues non motorisées peuvent pivoter par rapport au châssis autour d'un axe d'orientation vertical, et l'axe de rotation de la roue est aligné avec cet axe d'orientation vertical (concourant avec l'axe d'orientation vertical).

De préférence, pour le mode de réalisation pour lequel les roues non motorisés sont des roues orientables autour d'un axe vertical (décentrées ou non), le système de propulsion électrique peut comporter des moyens de blocage directionnel qui peuvent bloquer la rotation des roues non motorisées autour de leur axe vertical. Ainsi, la commande des moyens de blocage directionnel peut faciliter le déplacement du système de propulsion électrique. Selon un ou plusieurs modes de réalisation, les moyens de blocage directionnel peuvent être commandés lorsque le système de propulsion électrique est attelé à un objet roulant, et lorsque les roues de l'objet roulant en contact avec le sol sont des roues folles. Lors de l'attelage, les roues non motorisées peuvent être de préférence non bloquées par les moyens de blocage directionnel. Lorsque le système de propulsion électrique n'est pas attelé à l'objet roulant, le moyen de blocage directionnel est préférentiellement actionné.

L'invention concerne en outre un attelage formé d'un objet roulant, tel qu'un lit roulant, avec un système de propulsion électrique selon l'une quelconque des combinaisons de variantes décrites ci-dessus. L'objet roulant est attelé au système de propulsion par les moyens d'attelage. En d'autres termes, au moins une roue de l'objet roulant est saisie, orientée perpendiculairement à la direction longitudinale du châssis, et levée, par les moyens d'attelage du système de propulsion.

Selon un ou plusieurs modes de réalisation, le système de propulsion électrique comprend en outre des moyens d'aide à la conduite pour assister l'utilisateur dans la manoeuvre de l'attelage. Selon un ou plusieurs modes de réalisation, les moyens d'aide à la conduite comprennent au moins un troisième bras de longueur variable dit « extensible » adapté pour contrôler la distance entre l'au moins une roue entraînée et l'au moins une roue non entrainée. Selon un ou plusieurs modes de réalisation, le bras extensible est adapté pour contrôler la distance entre l'au moins une roue non entraînée et les bras d'arrimage. Selon un ou plusieurs modes de réalisation, le bras extensible est d'une part, supporté par la roue non entraînée, et d'autre part, connecté à la portion non motorisée. Selon un ou plusieurs modes de réalisation, le bras extensible est sensiblement horizontal et comprend un axe principal sensiblement parallèle à la direction longitudinale du châssis. Selon un ou plusieurs modes de réalisation, le bras extensible est déplaçable par rapport à la portion non motorisée (selon l'axe parallèle à la direction longitudinale du châssis) au moyen d'un deuxième actuateur, tel qu'un vérin, lui-même relié audit bras extensible et à la portion non motorisée. Selon un ou plusieurs modes de réalisation, le bras extensible est adapté pour que la distance entre l'au moins une roue non entraînée et les bras d'arrimage puisse être augmentée d'au moins 150 mm, préférablement augmentée entre 200 et 500 mm. Avantageusement, l'au moins une roue non entraînée ainsi déplacée vers la partie centrale de l'objet roulant, permet une manoeuvrabilité augmentée dite « effet 5ème roue », notamment lors de la rotation et/ou le déplacement de l'attelage dans des pièces et/ou des couloirs exigus, notamment lorsque le mouvement directionnel de ladite roue non entraînée est bloqué.

Selon un ou plusieurs modes de réalisation, le système de propulsion électrique réalise une séquence d'aide à la conduite en actionnant le deuxième actuateur de manière à déplacer le bras extensible et augmenter la distance entre l'au moins une roue non entraînée et les bras d'arrimage. Préférablement, le mouvement directionnel des roues non motorisées de la structure est préférentiellement laissé libre pendant l'actionnement de l'actuateur.

Préférablement, la séquence d'aide à la conduite est réalisée avant la séquence de levage. Il est entendu que la séquence d'aide à la conduite peut être réalisée indépendamment des séquences ci-dessus mentionnées.

Selon un ou plusieurs modes de réalisation, au moins une des roues du système de propulsion électrique comprend un système de freinage. Selon un ou plusieurs modes de réalisation, au moins une des roues non motorisées comprend un système de freinage. Avantageusement, le freinage d'une des roues non motorisées associé à l'entrainement de la roue motorisée permet à l'utilisateur de tourner l'attelage sans effort.

Selon un ou plusieurs modes de réalisation, lorsque le système de propulsion électrique est attelé à l'objet roulant, le système de propulsion électrique réalise une séquence de blocage de mouvement directionnel suivante. Cas 1 : le mouvement directionnel des roues non motorisées du système de propulsion électrique est préférentiellement laissé libre, et le mouvement directionnel d'au moins une des roues du lit et préférentiellement bloqué, préférentiellement une des roues les plus éloignées du système de propulsion électrique. Cas 2 : le mouvement directionnel d'un moins une des roues non motorisées du système de propulsion électrique est préférentiellement bloqué, et le mouvement directionnel de toutes les roues de l'objet roulant est préférentiellement laissé libre. Préférablement, lorsque la séquence d'aide à la conduite est réalisée, le système de propulsion électrique réalise la séquence de blocage de mouvement directionnel dite « Cas 2 ».

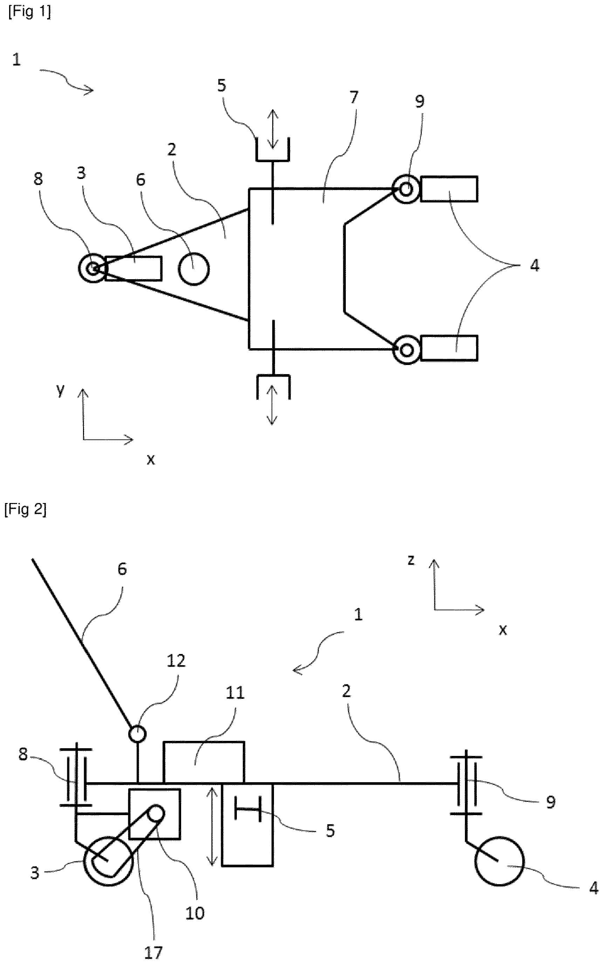

La figure 1 illustre, schématiquement et de manière non limitative, un système de propulsion électrique selon un ou plusieurs modes de réalisation de l'invention. La figure 1 est une vue de dessus du système de propulsion électrique 1. Le système de propulsion électrique 1 comprend un châssis 2. L'axe x correspond à l'axe longitudinal du châssis 2 et à la direction principale de déplacement du système de propulsion 1, et l'axe y correspond à l'axe latéral du châssis 2. Le châssis 2 supporte trois roues (alternativement le châssis 2 peut comprendre quatre roues). Le châssis 2 supporte une roue motorisée 3 (alternativement le châssis 2 peut supporter deux roues 3), qui est une roue entraînée par une machine électrique (non représentée). La roue motorisée 3 est orientable par rapport au châssis 2, autour d'un axe vertical 8. A l'autre extrémité, le châssis 2 supporte deux roues non motorisées 4, qui sont deux roues non entraînées par une machine électrique. Les roues non motorisées 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pince. Le déplacement latéral des moyens d'attelage est indiqué par une double flèche. Ce déplacement latéral peut servir à la préhension et à l'orientation des roues de l'objet roulant. Les moyens d'attelage 5 sont placés, dans la direction x, entre la roue motorisée 3 et les roues non motorisées 4. De plus, le système de propulsion électrique 1 comprend un guidon 6, par exemple sous la forme d'une tige équipée d'une poignée (non représentée) articulée par rapport au châssis 2. En outre, le système de propulsion électrique 1 comporte une plateforme 7 de support (par exemple d'un utilisateur). La plateforme 7 est située à l'extrémité du châssis 2 qui supporte les roues non motorisées 4.

La figure 2 illustre, schématiquement et de manière non limitative, un système de propulsion électrique selon un ou plusieurs modes de réalisation de l'invention. La figure 2 est une vue de côté du système de propulsion électrique1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2. Le châssis supporte trois roues. Le châssis 2 supporte une roue motorisée 3, qui est une roue entraînée par une machine électrique 10 au moyen d'un entraînement 17, par exemple une courroie ou une chaîne (alternativement la machine électrique 10 peut être reliée directement à la roue motorisée 3). La roue motorisée 3 est orientable par rapport au châssis 2, autour d'un axe vertical 8. La machine électrique 10 peut être solidaire du pivot 8 de la roue motorisée 3. A l'autre extrémité, le châssis 2 supporte deux roues non motorisées 4, qui sont deux roues non entraînées par une machine électrique. Les roues non motorisées 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pince. Le déplacement vertical des moyens d'attelage 5 est indiqué par une double flèche. Ce déplacement vertical des moyens d'attelage permet notamment le levage des roues de l'objet roulant. Les moyens d'attelage 5 sont placés, dans la direction x, entre la roue motorisée 3 et les roues non motorisées 4. De plus, le système de propulsion électrique 1 comprend un guidon 6, par exemple sous la forme d'une tige équipée d'une poignée (non représentée) articulée par rapport au châssis 2 au moyen d'une articulation 12 d'axe horizontal, selon la direction latérale du châssis 2 (perpendiculaire au plan de la figure). En outre, le système de propulsion électrique 1 comporte une batterie 11. La batterie 11 est placée sur le châssis 2 à proximité de la machine électrique 10 et de la roue motorisée 3.

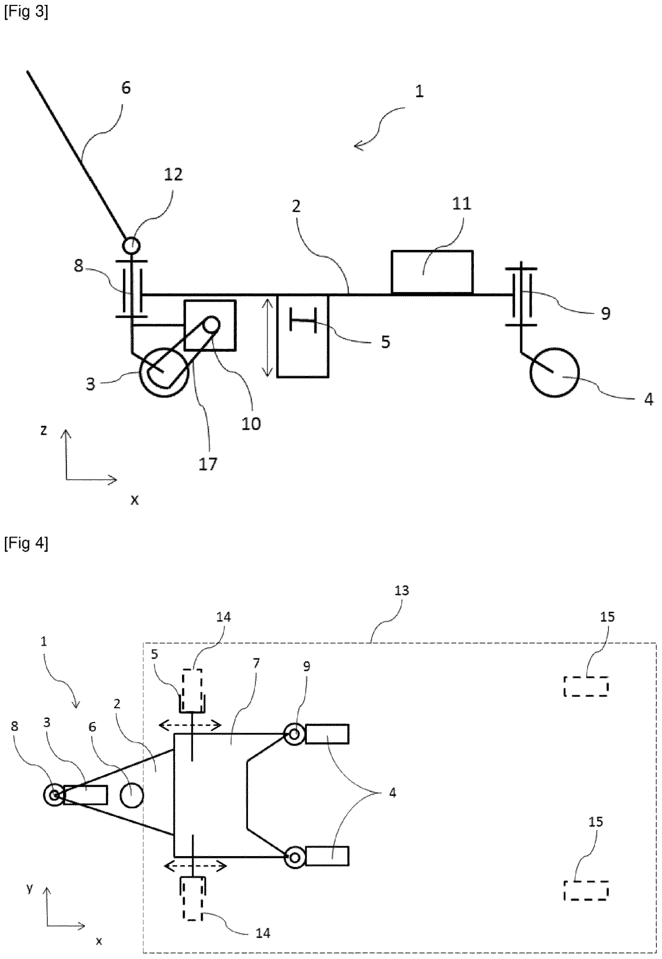

La figure 3 illustre, schématiquement et de manière non limitative, un système de propulsion électrique selon un ou plusieurs modes de réalisation de l'invention. La figure 3 est une vue de côté du système de propulsion électrique 1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2. Le châssis supporte trois roues. Le châssis 2 supporte une roue motorisée 3, qui est une roue entraînée par une machine électrique 10 au moyen d'un entraînement 17, par exemple une courroie ou une chaîne. La roue motorisée 3 est orientable par rapport au châssis 2, autour d'un axe vertical 8. La machine électrique 10 peut être solidaire du pivot 8 de la roue motorisée 3. A l'autre extrémité, le châssis 2 supporte deux roues non motorisées 4, qui sont deux roues non entraînées par une machine électrique. Les roues non motorisées 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pince. Le déplacement vertical des moyens d'attelage 5 est indiqué par une double flèche. Ce déplacement vertical des moyens d'attelage permet notamment le levage des roues de l'objet roulant. Les moyens d'attelage 5 sont placés, dans la direction x, entre la roue motorisée 3 et les roues non motorisées 4. De plus, le système de propulsion 1 comprend un guidon 6, par exemple sous la forme d'une tige équipée d'une poignée (non représentée) articulée par rapport à l'axe d'orientation vertical 8 de la roue motorisée 3 au moyen d'une articulation 12 d'axe horizontal, parallèle à l'axe de rotation de la roue motorisée. En outre, le système de propulsion électrique 1 comporte une batterie 11. La batterie 11 est placée sur le châssis 2 à proximité des roues non motorisées 4.

La figure 4 illustre, schématiquement et de manière non limitative, un système de propulsion électrique selon un ou plusieurs modes de réalisation de l'invention attelé à un objet roulant 13. La figure 1 est une vue de dessus du système de propulsion électrique 1 et de l'objet roulant 13. Le mode de réalisation de la figure 4 correspond au mode de réalisation de la figure 1. L'objet roulant 13 peut être de tout type, notamment un lit roulant. L'objet roulant comprend deux roues 14, appelés arbitrairement roues arrière, et deux roues 15, appelés arbitrairement roues avant. Le système de propulsion électrique 1 comprend un châssis 2. L'axe x correspond à l'axe longitudinal du châssis 2 et à la direction principale de déplacement du système de propulsion, et l'axe y correspond à l'axe latéral du châssis 2. Le châssis supporte trois roues. Le châssis 2 supporte une roue motorisée 3, qui est une roue entraînée par une machine électrique (non représentée). La roue motorisée 3 est orientable par rapport au châssis 2, autour d'un axe vertical 8. A l'autre extrémité, le châssis 2 supporte deux roues non motorisées 4, qui sont deux roues non entraînées par une machine électrique. Les roues non motorisées 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues arrière 14 de l'objet roulant. Les moyens d'attelage 5 sont représentés de façon simplifiée en tant que pince. Les roues arrière 14 de l'objet roulant sont placées dans la pince, et son orientés selon l'axe y, c'est-à-dire selon un axe perpendiculaire à l'axe longitudinal (axe x) du châssis 2. De plus, les roues avant 15 de l'objet roulant sont libres et non attelées. Le système de propulsion électrique 1 comprend également un guidon 6, par exemple sous la forme d'une tige équipée d'une poignée (non représentée) articulée par rapport au châssis 2. En outre, le système de propulsion électrique 1 comporte une plateforme 7 de support (par exemple d'un utilisateur). La plateforme 7 est située à l'extrémité du châssis 2 qui supporte les roues non motorisées 4. Pour le mode de réalisation de la figure 4, les moyens d'attelage 5, les roues non motorisées 4, la plateforme 7, et une majeure partie du châssis 2 sont situées en-dessous de l'objet roulant. Seuls la roue motorisée 3 et le guidon 6 peuvent dépasser de l'objet roulant 13 dans la direction longitudinale x du châssis 2.

Sur cette figure, les doubles flèches en pointillés indiquent que les moyens d'attelage 5 peuvent se déplacer longitudinalement le long d'un axe parallèle à l'axe x, de manière à s'approcher de la roue entraînée 3 ou au contraire de manière à s'approcher des roues non entraînées 4. Selon une variante, les moyens d'attelage peuvent se déplacer indépendamment l'un de l'autre.

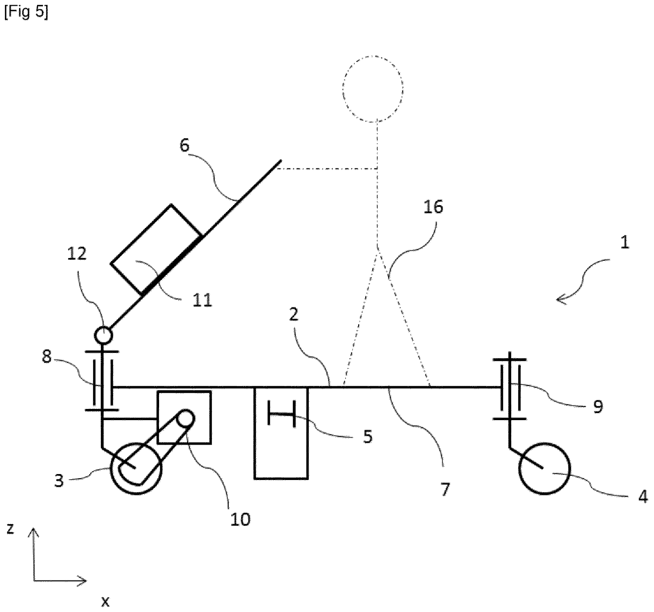

La figure 5 illustre, schématiquement et de manière non limitative, un système de propulsion électrique selon un ou plusieurs modes de réalisation de l'invention, le système de propulsion électrique 1 étant utilisé en tant que trottinette par un utilisateur 16. La figure 5 est une vue de côté du système de propulsion 1. Le système de propulsion de la figure 5 correspond sensiblement au système de propulsion de la figure 3. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2. Le châssis supporte trois roues. Le châssis 2 supporte une roue motorisée 3, qui est une roue entraînée par une machine électrique 10 au moyen d'un entraînement 17, par exemple une courroie ou une chaîne. La roue motorisée 3 est orientable par rapport au châssis 2, autour d'un axe vertical 8. La machine électrique 10 peut être solidaire du pivot 8 de la roue motorisée 3. A l'autre extrémité, le châssis 2 supporte deux roues non motorisées 4, qui sont deux roues non entraînées par une machine électrique. Les roues non motorisées 4 sont orientables par rapport au châssis autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 sont représentés de façon simplifiée en tant que pince. Les moyens d'attelage 5 sont placés, dans la direction x, entre la roue motorisée 3 et les roues non motorisées 4. De plus, le système de propulsion électrique 1 comprend un guidon 6, par exemple sous la forme d'une tige équipée d'une poignée (non représentée) articulée par rapport au pivot 8 au moyen d'une articulation 12 d'axe horizontal, parallèle à l'axe de rotation de la roue motorisée En outre, le système de propulsion électrique 1 comporte une batterie 11. La batterie 11 est placée sur le guidon 6. Le châssis 2 comporte dans son extrémité longitudinale à proximité des roues non motorisées 4, une plateforme 7. Pour l'utilisation illustrée du système de propulsion électrique 1 non attelé, le système de propulsion électrique est utilisé en tant que trottinette par l'utilisateur 16 : l'utilisateur est debout sur la plateforme 7 et maintient et/ou actionne le guidon 6.

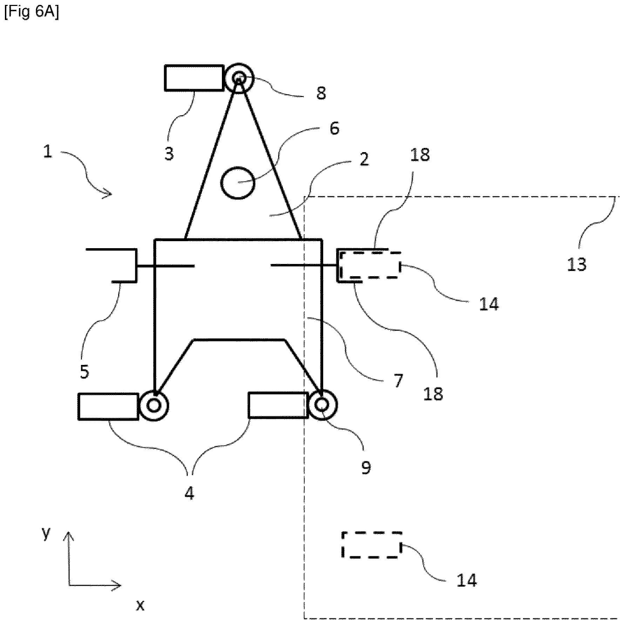

La figure 6A illustre (en vue de dessus), schématiquement et de manière non limitative, la séquence de préhension d'un système de propulsion électrique 1 selon un ou plusieurs modes de réalisation de l'invention en approchant les moyens d'attelage 5 d'une roue arrière 14 de l'objet roulant 13 jusqu'à l'introduction de la roue de l'objet roulant entre deux éléments de saisie 18, l'axe de rotation de la roue arrière 14 étant perpendiculaire à l'axe principal des deux éléments de saisie 18. Dans cet exemple, la distance entre les éléments de saisie 18 et le sol pendant la séquence préhension est sensiblement de 0,5 fois le diamètre de la roue 14 de l'objet roulant et la distance entre les deux éléments de saisie est de 8 cm, i.e., distance supérieure à l'épaisseur (6 cm) de la roue 14 de l'objet roulant. Dans cet exemple, l'élément de saisie 18 disposé du côté de (faisant face à) la roue motorisée 3, est plus long que l'élément de saisie 18 disposé du côté des roues non motorisées 4. Dans cet exemple, l'élément de saisie 18 disposé du côté de la roue motorisée 3, est plus long de 6 cm que l'élément de saisie 18 disposé du côté des roues non motorisées 4. L'élément de saisie 18 peut être une tige ou une plaque.

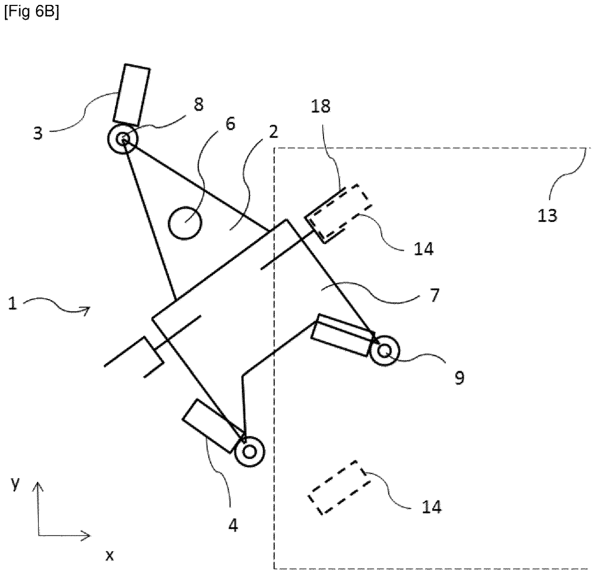

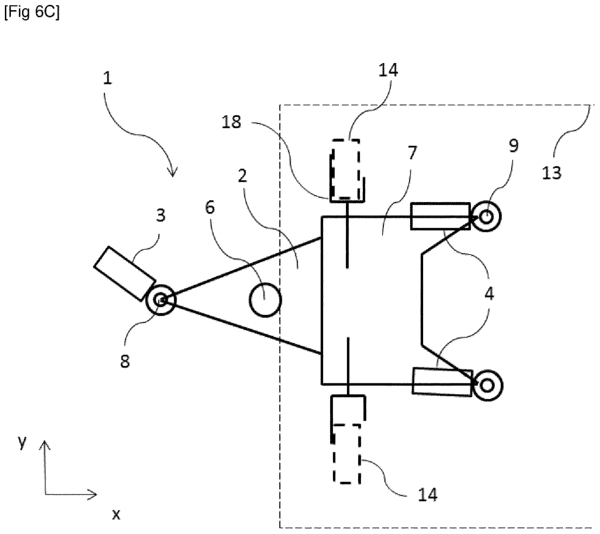

Les figures 6B et 6C illustrent (en vue de dessus), schématiquement et de manière non limitative, la séquence d'orientation d'un système de propulsion électrique 1 selon un ou plusieurs modes de réalisation de l'invention en mettant en rotation la roue 14 saisie autour de son point de contact au sol afin d'orientant la roue 14 saisie (par les éléments de saisie 18) dans une direction sensiblement perpendiculaire à la direction longitudinale du châssis du système de propulsion. Dans cet exemple, l'orientation est effectuée par la rotation du système de propulsion électrique 1 autour de l'axe vertical de la roue 14 saisie jusqu'à ce que la roue 14 saisie soit placée dans une direction parallèle à la direction latérale du châssis 2. Comme montré dans les figures 6B et 6C, la mise en rotation par le système de propulsion électrique 1 de la roue 14 saisie (elle-même liée à l'objet roulant 13 par un axe de rotation vertical ne passant pas par le dit point de contact), a pour conséquence de provoquer un léger déplacement de l'objet roulant 13. Le déplacement de l'objet roulant 13 provoque alors une rotation d'une deuxième roue 14 de l'objet roulant autour de son point de contact avec le sol. La rotation de la deuxième roue 14 de l'objet roulant est semblable à celle imposée à la première roue arrière 14 (effet Caddy^{™}). Dans cet exemple, la rotation du système de propulsion électrique 1 est appliquée jusqu'à ce que le deuxième jeu de deux éléments de saisie 18 entre en contact avec ladite deuxième roue 14 de l'objet roulant. Dans cet exemple, le mouvement directionnel des roues non motorisées 4 de la structure est préférentiellement laissé libre.

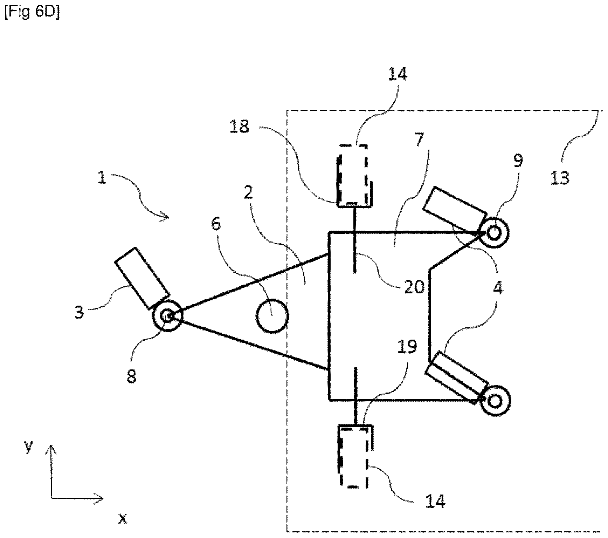

La figure 6D illustre (en vue de dessus), schématiquement et de manière non limitative, la séquence d'immobilisation d'un système de propulsion électrique 1 selon un ou plusieurs modes de réalisation de l'invention en déplaçant une branche d'immobilisation 19, disposée entre les éléments de saisie 18, de manière à contacter et bloquer les roues 14 saisies, par exemple, au moyen d'un ou plusieurs vérins, par exemple de vérin électrique, de système vis écrous, de système pignon-crémaillère ou tout moyen analogue. Dans cet exemple, les branches d'immobilisation 19 sont disposées du côté intérieur du châssis 2 par rapport aux éléments de saisie 18. Dans cet exemple, des bras d'arrimage 20 sont écartés, l'un de l'autre (i.e., déplacés vers l'extérieur du châssis 2, par exemple au moyen de vérins), jusqu'à ce que les branches d'immobilisation 19 arrivent en contact puis en butée avec les roues 14 saisies. Dans cet exemple, le mouvement directionnel des roues non motorisées 4 de la structure est préférentiellement laissé libre.

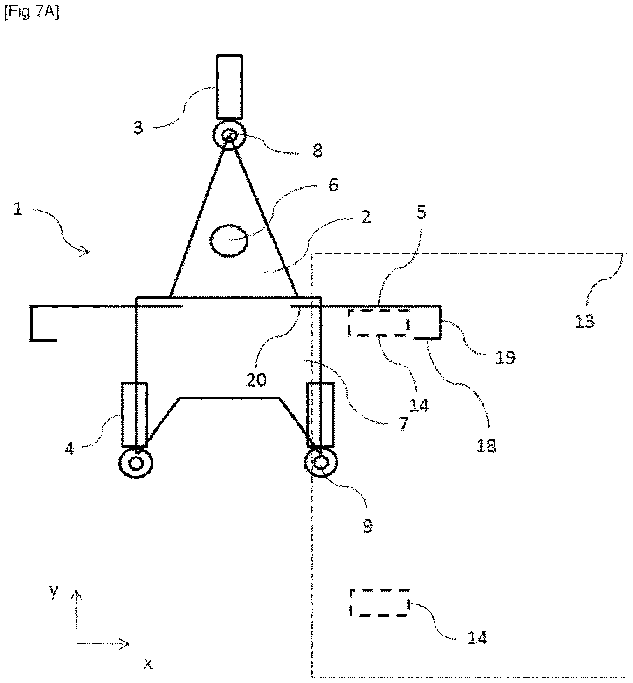

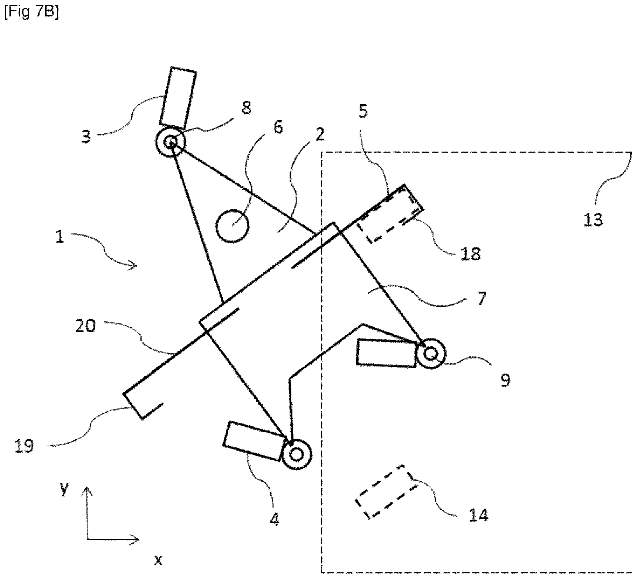

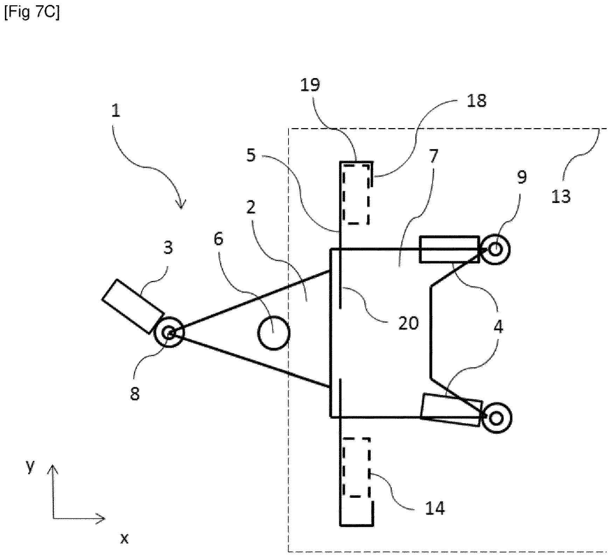

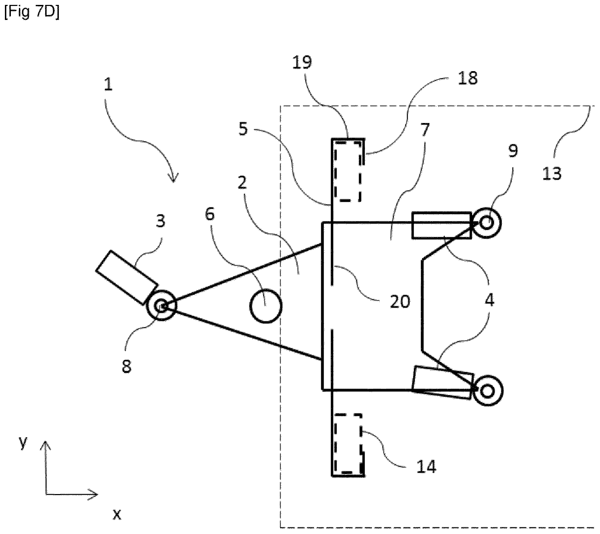

Les figures 7A, 7B, 7C et 7D illustrent (en vue de dessus), schématiquement et de manière non limitative, les séquences de préhension, d'orientation et d'immobilisation similaires aux séquences définies ci-dessus en référence aux figures 6A, 6B, 6C et 6D, à la différence que les branches d'immobilisation 19 sont disposées du côté extérieur du châssis 2 par rapport aux éléments de saisie 18. Dans l'exemple de la figure 7A, la séquence de préhension n'est pas terminée. Entre la figure 7A et 7B, l'utilisateur peut susciter un déplacement des éléments de saisie 18 autour de la roue 14 pour terminer la séquence de préhension, avant, pendant ou après la séquence de rotation.

Dans l'exemple de la figure 7D, les bras d'arrimage 20 sont rapprochés, l'un de l'autre (i.e., déplacés vers l'intérieur du châssis 2, par exemple au moyen de vérins), jusqu'à ce que les branches d'immobilisation 19 arrivent en contact puis en butée avec les roues 14 saisies. Dans ces exemples, le mouvement directionnel des roues non motorisées 4 de la structure est préférentiellement laissé libre.

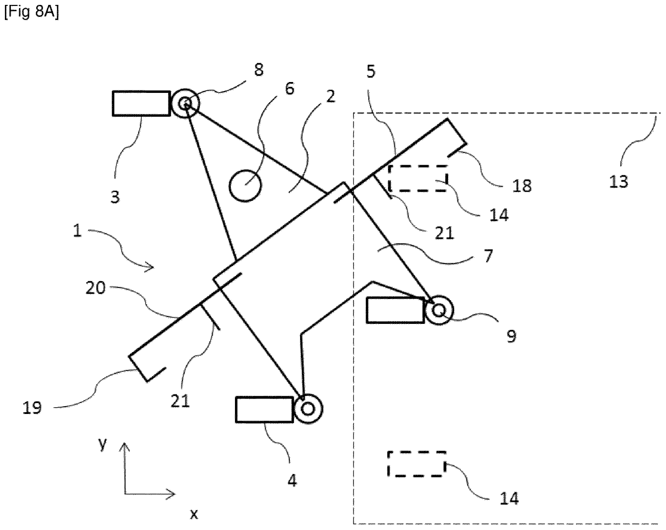

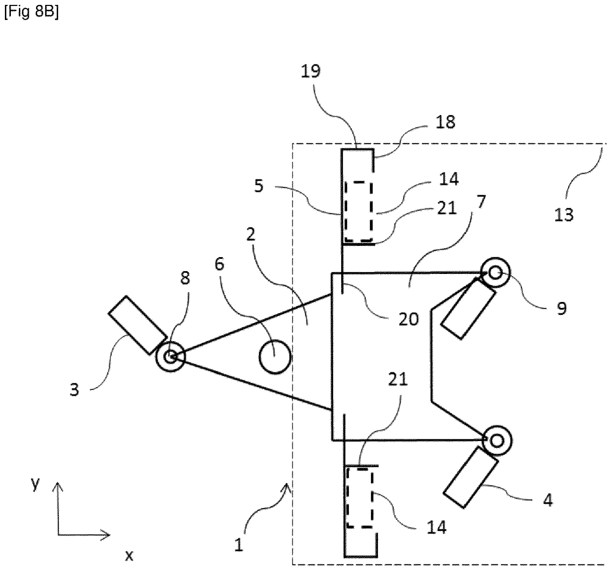

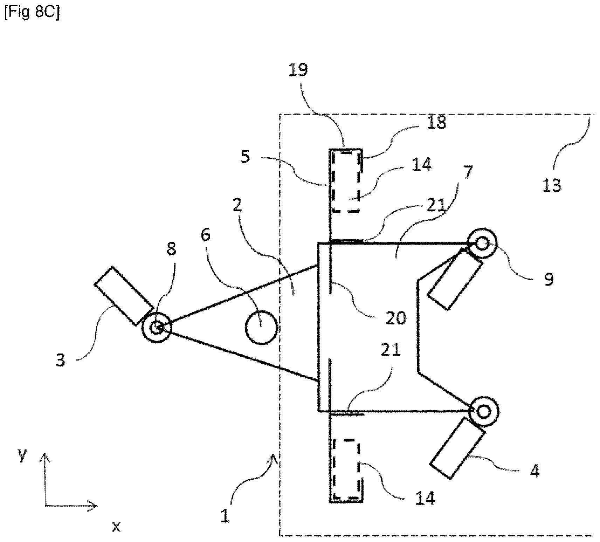

Les figures 8A, 8B et 8C illustrent (en vue de dessus), schématiquement et de manière non limitative, les séquences de préhension, d'orientation et d'immobilisation similaires aux séquences définies ci-dessus en référence aux figures 7A, 7B, 7C et 7D, à la différence que les moyens d'attelage 5 comprennent un élément de butée 21 disposé du côté intérieur des moyens d'attelage 5 par rapport aux éléments de saisie 18, l'élément de butée 21 étant pourvu pour guider la roue 14 de l'objet roulant 13 de sorte que la dite roue 14 vienne en butée contre l'élément de saisie 18 disposé du côté de la roue motorisée 3. Les figures 8A et 8B illustrent notamment que l'élément de saisie 18 disposé du côté de la roue motorisée 3 et l'élément de butée 21 permettent de guider la roue 14 de l'objet roulant 13 pendant la séquence d'orientation sans qu'il soit nécessaire d'introduire ladite roue 14 entre les deux éléments de saisie 18. La figure 8C illustre les séquences de préhension et d'immobilisation s'achevant en même temps lorsque les bras d'arrimage 20 sont rapprochés, l'un de l'autre (i.e., déplacés vers l'intérieur du châssis 2, par exemple au moyen de vérins), jusqu'à ce que les branches d'immobilisation 19 arrivent en contact puis en butée avec les roues 14 saisies. Dans ces exemples, le mouvement directionnel des roues non motorisées 4 de la structure est préférentiellement laissé libre.

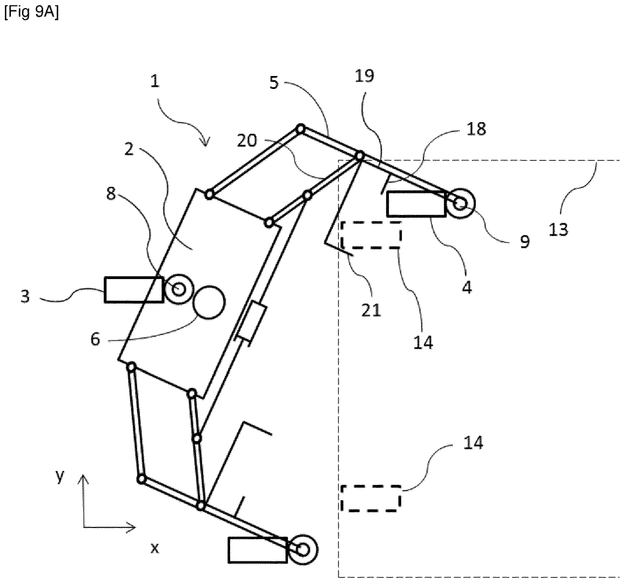

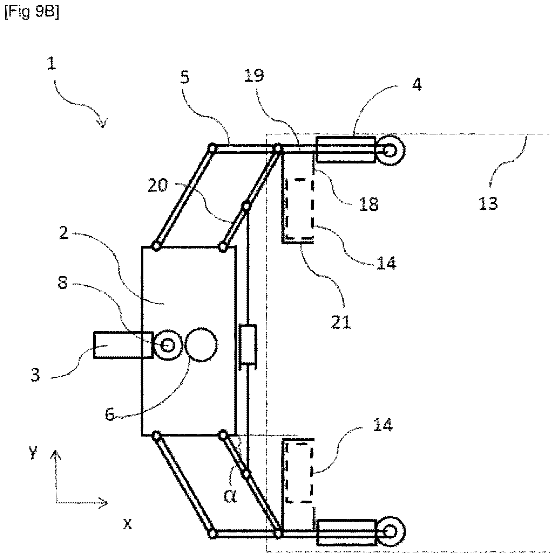

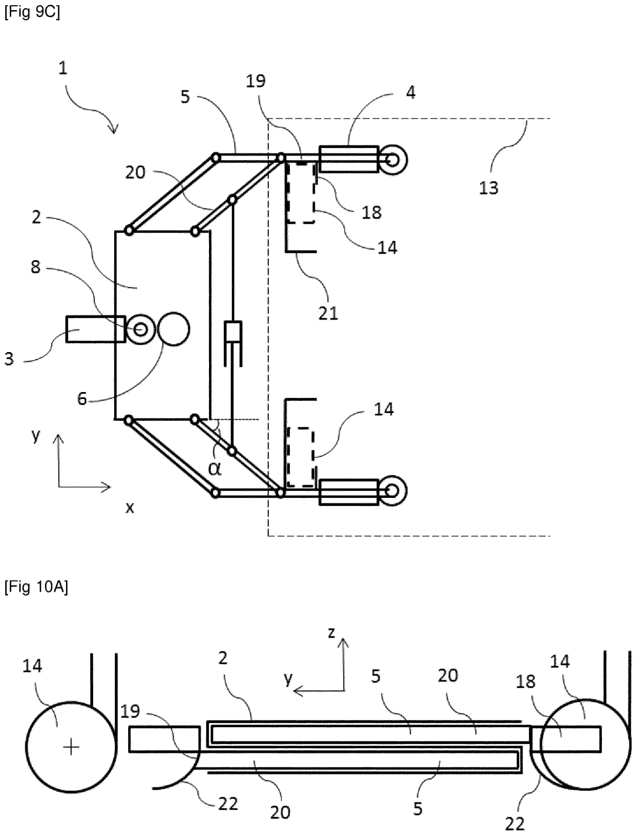

Les figures 9A, 9B et 9C illustrent (en vue de dessus), schématiquement et de manière non limitative, les séquences de préhension, d'orientation et d'immobilisation similaires aux séquences définies ci-dessus en référence aux figures 8A, 8B et 8C, à la différence que les moyens d'attelage 5 sont supportés par les roues non motorisées 4 et que les branches d'immobilisation 19 forment un système de pince pouvant être serré par un vérin adapté pour rapprocher les bras d'arrimage 20, l'un de l'autre par un mouvement de rotation. Dans cet exemple, les bras d'arrimage 20 sont reliés entre eux et sont mis en mouvement par un actuateur commun, tel qu'un vérin. Comme montré sur les figures 9B et 9C, chaque bras d'arrimage est déplaçable en rotation autour d'un axe de pivot vertical, l'axe principal d'un bras d'arrimage formant, par rapport à l'axe longitudinal du châssis (i.e., l'axe x), un angle α sensiblement supérieur à 45° en fin de séquence de rotation (figure 9B), et un angle α sensiblement inférieur à 45° en fin de séquence d'immobilisation (figure 9C).

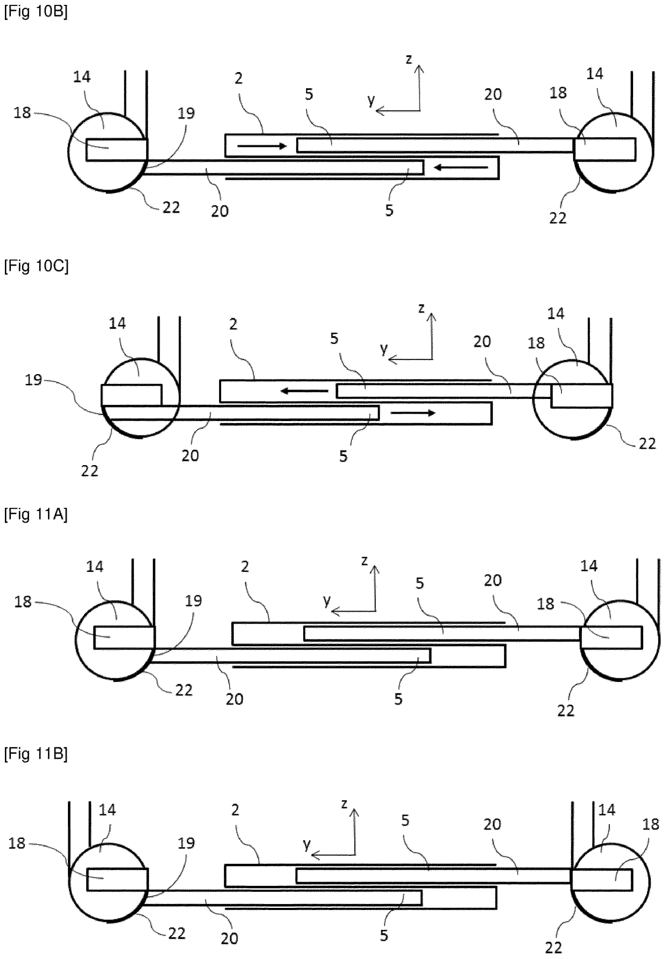

Les figures 10A, 10B et 10C illustrent (en vue de côté selon la direction transversale), schématiquement et de manière non limitative, les séquences d'immobilisation similaires aux séquences définies ci-dessus en référence aux figures 6C, 6D et 7D, respectivement, dans lesquelles les branches d'immobilisation 19 comprennent un élément de support 22 (pièce plate, inclinée ou courbée ou en forme d'équerre adaptée pour passer sous la roue 14 saisie et supporter la roue 14 immobilisée). Comme montré dans les figures 10B et 10C, lors de la séance d'immobilisation, l'élément de support 22 est adapté pour passer sous la roue 14 saisie lors de l'actuation des bras d'arrimage 20 et ainsi supporter la roue 14 immobilisée.

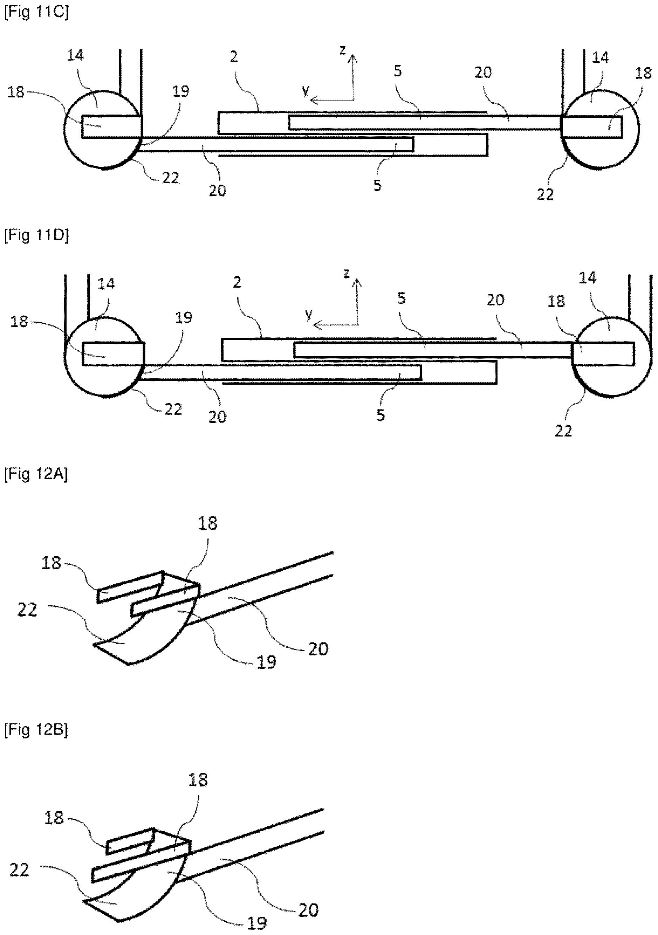

Les figures 11A et 11B illustrent (en vue de côté selon la direction transversale), schématiquement et de manière non limitative, des séquences d'immobilisation, dans lesquelles les roues 14 immobilisées sont orientées dans la même direction selon l'axe perpendiculaire à la direction longitudinale du châssis (éléments d'immobilisation disposés en opposition). La figure 11C illustre, schématiquement et de manière non limitative, une séquence d'immobilisation, dans laquelle les roues 14 immobilisées sont orientées dans des directions différentes et disposées en opposition selon l'axe perpendiculaire à la direction longitudinale du châssis. La figure 11D illustre, schématiquement et de manière non limitative, une séquence d'immobilisation, dans laquelle les roues 14 immobilisées sont orientées dans des directions différentes et disposées en vis-à-vis selon l'axe perpendiculaire à la direction longitudinale du châssis. Bien que les figures 11A, 11B, 11C et 11D soient illustrées avec des branches d'immobilisation 19 disposées du côté intérieur du châssis 2 par rapport aux éléments de saisie 18, il est également envisagé d'immobiliser les roues 14 de l'objet roulant dans la même direction, en opposition ou en vis-à-vis avec des branches d'immobilisation 19 disposées du côté extérieur du châssis 2 par rapport aux éléments de saisie 18.

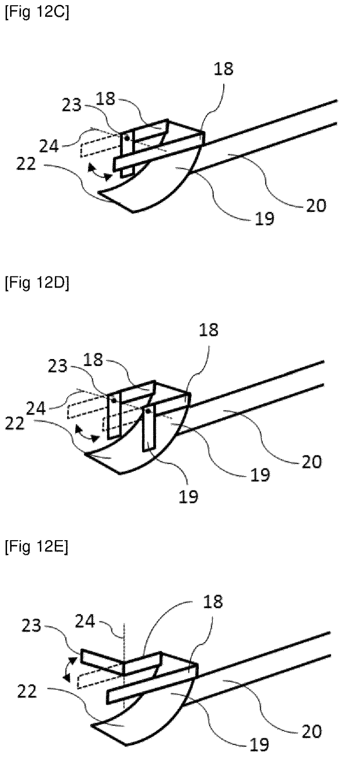

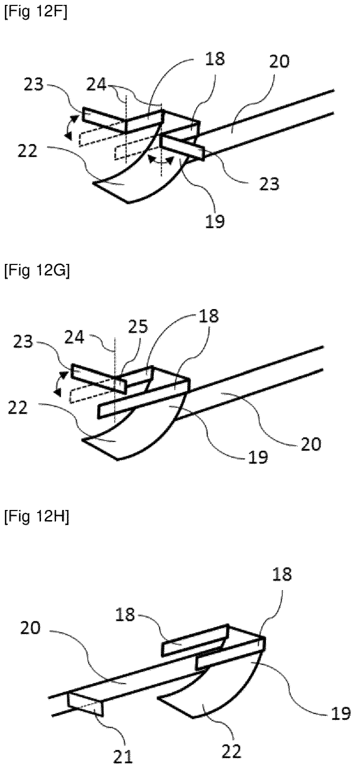

Les figures 12A-12I illustrent (en vue tridimensionnelle), schématiquement et de manière non limitative, des moyens de préhension et d'immobilisation selon un ou plusieurs modes de réalisation. Spécifiquement, la figure 12A montre un bras d'arrimage 20, comprenant une branche d'immobilisation 19 pourvue d'un élément de support 22 en forme de cuillère ou de pelle, le bras d'arrimage 20 étant prolongé par deux éléments de saisie 18 de longueur sensiblement identique. La figure 12B montre un exemple dans lequel un élément de saisie 18 est sensiblement plus long que l'autre élément de saisie. Préférablement, l'élément de saisie 18 disposé du côté de (le plus proche de) la roue motorisée 3, est sensiblement plus long que l'élément de saisie 18 disposé du côté de la ou des roues non motorisées 4, permettant ainsi de faciliter la séquence de préhension en servant de guide lors de la saisie la roue 14 de l'objet roulant 13. Les figures 12C-12G montrent des exemples dans lesquels une pièce mobile 23, telle qu'une tige ou une plaque (e.g. métallique), est connectée à au moins un élément de saisie 18 au travers d'un axe de rotation 24, la pièce mobile 23 étant disposée sur l'extrémité de l'élément de saisie 18 opposée à la branche d'immobilisation 19. La pièce mobile 23 permet de limiter l'encombrement de l'élément de saisie 18 lors de la séquence de préhension, et facilite le maintien de la roue 14 saisie entre les éléments de saisie 18 lors de la séquence de rotation. En référence aux figures 12C et 12D, la pièce mobile 23 comprend un axe principal sensiblement verticale et l'axe de rotation 24 est parallèle à la direction longitudinale du châssis. La pièce mobile 23 est préférablement disposée vers le bas par rapport à l'élément de saisie 18 afin d'augmenter la compacité des moyens d'attelage. En référence aux figures 12E et 12F, la pièce mobile 23 comprend un axe principal sensiblement horizontal, est parallèle à la direction longitudinale du châssis, est disposée sur le côté opposé à l'élément de saisie 18 adjacent, et comprend un axe de rotation 24 vertical. En référence à la figure 12G, la pièce mobile 23 telle que décrite dans la figure 12E comprend en outre une portion interne 25 disposée sur le côté en vis-à-vis de l'élément de saisie 18 adjacent. La longueur de la portion interne est strictement inférieure à la distance entre les deux éléments de saisie 18 pour permettre l'introduction de la roue 14 saisie entre les éléments de saisie 18. La portion interne 25 permet notamment de servir de point d'appui pour l'actuation de la pièce mobile autour de l'axe de rotation lorsque la roue 14 de l'objet roulant vient en butée contre ladite portion interne 25. La figure 12H montre un exemple de bras d'arrimage 20 de moyens d'attelage par préhension externe, dans lequel un élément de butée 21 est disposé sur le bras d'arrimage 20. La figure 12I montre un exemple de bras d'arrimage 20 de moyens d'attelage par préhension externe, dans lequel l'élément de butée 21 est disposé sur l'élément de saisie 18.

Les figures 13A, 13B, 14A et 14B illustrent (en vue de côté selon une direction latérale), schématiquement et de manière non limitative, des moyens de levage en position basse (figures 13A et 14A) et en positon haute (figure 13B et 14B) selon un ou plusieurs modes de réalisation, comprenant une structure articulée en partie centrale du châssis (e.g. entre l'au moins une roue motorisée et l'au moins une roue non motorisée). La structure articulée comprend d'une part, une première portion de châssis dite « portion motrice 26 » supportée par l'au moins une roue motorisée 3, et comprend d'autre part, une deuxième portion de châssis dite « portion non motorisée 27 » supportée par l'au moins une roue non motorisée 4. Les portions de châssis 26 et 27 sont articulées l'une par rapport à l'autre autour d'un axe de rotation horizontal dit « axe d'articulation 28 » sensiblement perpendiculaire à la direction longitudinale du châssis. Le système de propulsion électrique 1 réalise la séquence de levage en actionnant un premier actuateur de manière à provoquer un déplacement sensiblement vertical vers le haut de l'axe d'articulation 28 en modifiant l'angle β entre les portions de châssis 26 et 27 au niveau de l'axe d'articulation 28. En référence aux figures 13A et 13B, l'axe d'articulation 28 est disposé sur une extrémité basse des portions de châssis 26 et 27, et l'angle β est augmenté pour passer de la position basse à la position haute. En référence aux figures 14A et 14B, l'axe d'articulation 28 est disposé sur une extrémité haute des portions de châssis 26 et 27, et l'angle β est diminué pour passer de la position basse à la position haute.

Les figures 15A à 15F illustrent (les figures 15A et 15D en vue de côté selon un direction latérale, et les figures 15B, 15C, 15E et 15F en vue tridimensionnelle), schématiquement et de manière non limitative, des moyens de levage en position basse (figures 15A, 15B et 15C) et en positon haute (figure 15D, 15E et 15F) selon un ou plusieurs modes de réalisation, dans lesquelles l'axe d'articulation 28 est disposé sur une extrémité basse des portions de châssis 26 et 27, et l'angle β est augmenté pour passer de la position basse à la position haute. Dans cet exemple, le premier actuateur 29 est connecté selon l'axe longitudinal du châssis 2 (i.e., selon la vue xz des figures) d'une part, à une portion centrale 30 de la portion motrice 26, et d'autre part, à une portion d'extrémité arrière 31 de la portion non motorisée 27 (i.e., extrémité en vis-à-vis avec la portion motrice 26). En référence aux figures 15B et 15E, le premier actuateur 29 peut être unique et disposé adjacent d'une portion centrale 30' selon une vue de dessus (selon un axe sensiblement horizontal et sensiblement perpendiculaire à la direction longitudinale du châssis 2) des portions de châssis 26 et 27. Avantageusement, un seul actuateur de levage est nécessaire. En référence aux figures 15C et 15F, le premier actuateur 29 est assisté d'un actuateur complémentaire 29', chaque actuateur étant disposé adjacent des portions d'extrémité latérale 30" selon une vue de dessus (i.e., selon la vue xy des figures) de la portion motrice 26. Avantageusement, les actuateurs de levage sont disposés sur les côtés du châssis afin de libérer de la place au milieu du châssis et de gagner en compacité des moyens d'attelage.

Les figures 16A à 16D illustrent (les figures 16A et 16C en vue de côté selon un direction latérale, et les figures 16B, et 16D en vue tridimensionnelle), schématiquement et de manière non limitative, des moyens de levage en position basse (figures 16A et 16B) et en positon haute (figure 16C et 16D) selon un ou plusieurs modes de réalisation, dans lesquelles l'axe d'articulation 28 est disposé sur une extrémité basse des portions de châssis 26 et 27, et l'angle β est augmenté pour passer de la position basse à la position haute. Dans cet exemple, le premier actuateur 29 est connecté selon l'axe longitudinal du châssis 2 (i.e., selon la vue xz des figures) d'une part, à une portion centrale 30 de la portion motrice 26, et d'autre part, à une portion d'extrémité arrière 31 de la portion non motorisée 27 (i.e., extrémité en vis-à-vis avec la portion motrice 26). En référence à la figure 16B et 16D, le premier actuateur 29 est unique et est disposé adjacent d'une portion d'extrémité 30" selon une vue de dessus (i.e., selon la vue xy des figures) des portions de châssis 26 et 27. Avantageusement, un seul actuateur de levage est nécessaire et ledit actuateur est disposé sur les côtés du châssis afin de libérer de place au milieu du châssis et de gagner en compacité des moyens d'attelage. Dans cet exemple, le premier actuateur 29 est adapté pour : actionner d'une part, une bielle croisée 32 connectée à une première extrémité du premier actuateur 29, par exemple par l'intermédiaire d'un renvoi 33 ; et actionner d'autre part, une bielle non croisée 34 connectée à la deuxième extrémité du premier actuateur 29, par exemple par l'intermédiaire d'un arbre 35 traversant la portion centrale 30 (i.e., arbre horizontal et perpendiculaire à la direction longitudinale du châssis). Une desdites bielles 32, 34 est connectée selon l'axe longitudinal du châssis 2 en une de ses extrémité à une portion centrale (30) de la première portion de châssis 26 par l'intermédiaire du renvoi 33, et en son autre extrémité à une portion d'extrémité arrière 31 de la deuxième portion de châssis 27. L'autre desdites bielles 32, 34 est connectée selon l'axe longitudinal du châssis 2 en une de ses extrémité à une portion centrale (30) de la portion motrice 26 par l'intermédiaire de l'élément 35, et en son autre extrémité à une portion d'extrémité arrière 31 de la portion non motorisée 27. Dans cet exemple, la bielle croisée 32 est du même côté que l'actuateur 29 et la bielle non croisée 34 est reliée à l'actuateur 29 au moyen de l'arbre 35. Il est également envisagé que la bielle non croisée 34 soit du même côté que l'actuateur 29 et que la bielle croisée 32 soit reliée à l'actuateur 29 au moyen de l'arbre 35.

En référence aux figures 16A à 16C, selon un ou plusieurs modes de réalisation l'angle β est modifié de 20° à 90°, préférablement de 60° à 90°, entre une position basse et une position haute des portions de châssis 26 et 27.

Les figures 17A et 17B illustrent, schématiquement et de manière non limitative, des moyens d'aide à la conduite selon un ou plusieurs modes de réalisation adaptés pour assister l'utilisateur à manoeuvrer l'attelage et comprenant deux bras extensibles 36 permettant de modifier la distance entre l'au moins une roue non motorisée 4 et les bras d'arrimage 20. Chaque bras extensibles 36 est d'une part, supporté par la roue non motorisée 4 au travers de l'axe vertical 9, et d'autre part, connecté à la portion non motorisée 27. Avantageusement, Les bras extensibles 36 permettent de positionner les roues non motorisées 4 au plus près de la partie centrale 37 de l'objet roulant (selon la direction longitudinale du châssis). Il résulte une manoeuvrabilité dite « effet 5ème roue » augmentée, notamment lors de la rotation et/ou le déplacement de l'attelage dans des pièces et/ou des couloirs exigus, notamment lorsque le mouvement directionnel de ladite roue non motorisée 4 est bloqué. En référence à la figure 17A, les bras extensibles 36 sont dans une position rétractée. En référence à la figure 17B, lorsque le système de propulsion électrique réalise la séquence d'aide à la conduite, le deuxième actuateur est actionné de manière à allonger les bras extensibles 36 et augmenter la distance entre les roue non motorisées 4 des bras d'arrimage 20.

Sur toutes les figures, les moyens d'attelage sont représentés fixes en position longitudinale sur le châssis. Néanmoins, ils pourraient alternativement comprendre un moyen de réglage en position longitudinale sur le châssis ou sur la plateforme. Le moyen de réglage peut être indépendant pour chacun des moyens d'attelage, ou bien permettant die réglage simultanément des différents moyens d'attelage. Ce moyen de réglage peut notamment être commandé par un moyen de pilotage, l'utilisateur pouvant agir sur ce moyen de pilotage, par exemple par une télécommande ou un téléphone intelligent, pour commander le déplacement d'un ou de plusieurs moyens d'attelage, dans la direction longitudinale, vers l'avant ou vers l'arrière du système de propulsion électrique.

Ces moyens de réglage peuvent notamment être utilisés lorsque les roues de l'objet roulant ne sont pas situées dans un même plan orthogonal à l'axe longitudinal de l'objet roulant (ou du châssis). Ils peuvent également être utiles pour faciliter la préhension des roues de l'objet roulant et aider à la compacité du système attelé ou non attelé.

Les figures 18A et 18B illustrent, schématiquement et de manière non limitative, des moyens d'aide à la conduite selon un ou plusieurs modes de réalisation similaires aux moyens d'aide à la conduite en référence aux figures 17A et 17B, à la différence que les roues 14 de l'objet roulant 13 sont immobilisée par préhension et immobilisation externe. Spécifiquement, la figure 18A montre les bras extensibles 36 en position rétractée et la figure 18B montre les bras extensibles 36 en position allongée. Préférablement, le mouvement directionnel des roues non motorisées 4 de la structure est préférentiellement laissé libre pendant l'actionnement de l'actuateur. Bien que les figures 18A et 18B montrent que les moyens d'attelage 5 sont supportés par les roues non motorisées 4, il est également envisagé que les moyens d'attelage 5 soient par préhension externe sans être supportés par les roues non motorisées (voir par exemple, les figures 7A-8C).
Dans la présente demande, le terme « comprendre » est synonyme de (signifie la même chose que) « inclure » et « contenir », et est inclusif ou ouvert et n'exclut pas d'autres éléments non récités. Il est entendu que le terme « comprendre » inclut le terme exclusif et fermé « consister ». En outre, dans la présente description, les termes « environ », « substantiellement » « sensiblement », « essentiellement », « uniquement » et « à peu près » sont synonymes par défaut de marge inférieure et/ou supérieure de 20 %, préférablement de 10 %, très préférablement de 5%, de la valeur donnée. Par exemple, sensiblement perpendiculaire correspond par défaut à un angle de 78° à 108° ; sensiblement parallèle correspond par défaut à un angle de -18° à 18° ; sensiblement vertical correspond par défaut à vertical +/- 18° ; sensiblement horizontal correspond par défaut à horizontal +/-18°.

## Revendications

1. Système de propulsion électrique amovible pour un objet roulant (13), le système de propulsion (1) comprenant un châssis (2) muni d'au moins une roue entrainée (3) par une machine électrique (10), et d'au moins une roue non entraînée (4), un guidon (6) et des moyens d'attelage (5) du système de propulsion (1) à l'objet roulant (13), lesdits moyens d'attelage (5) comprenant des moyens de préhension, d'orientation, d'immobilisation et de levage d'au moins une roue (14) de l'objet roulant (13), le système de propulsion (1) comprenant en outre :
des moyens d'aide à la conduite comprenant au moins un bras de longueur variable (36) adapté pour faire varier la distance entre l'au moins une roue entraînée (3) et l'au moins une roue non entrainée (4), **caractérisé en ce que**
les moyens d'orientation sont adaptés pour orienter l'au moins une roue (14) de l'objet roulant (13) dans une direction sensiblement perpendiculaire à la direction longitudinale (x) du châssis (2) du système de propulsion (1).

2. Système de propulsion électrique amovible selon la revendication 1, dans lequel le bras de longueur variable (36) est d'une part, supporté par la roue non entraînée (4), et d'autre part, connecté au châssis (2) ou connecté aux moyens d'attelage (5) portant un élément d'immobilisation (19).

3. Système de propulsion électrique amovible selon la revendication 1 ou la revendication 2, dans lequel le bras de longueur variable (36) est sensiblement horizontal et comprend un axe principal sensiblement parallèle à la direction longitudinale (x) du châssis (2).

4. Système de propulsion électrique amovible selon la revendication 3, comprenant un actuateur relié audit bras de longueur variable (36) et à la portion non motorisée (27) pour faire varier la longueur dudit bras de longueur variable (36).

5. Système de propulsion électrique amovible selon la revendication 4, comprenant des moyens de blocage directionnel adaptés pour bloquer/débloquer la rotation de la roue non motorisée (4) autour d'un axe vertical, et dans lequel le mouvement directionnel de la roue non motorisée (4) est adapté pour être laissé libre pendant l'actionnement de l'actuateur.

6. Système de propulsion électrique amovible selon l'une quelconque des revendications précédentes, dans lequel les moyens de préhension comprennent au moins un jeu de deux éléments de saisie (18) dont les axes principaux sont sensiblement perpendiculaires à la direction longitudinale (x) du châssis (2), les deux éléments de saisie (18) étant adaptés pour capturer la roue (14) de l'objet roulant (13).

7. Système de propulsion électrique amovible selon l'une quelconque des revendications précédentes, dans lequel les moyens d'immobilisation comprennent un bras d'arrimage (20) sensiblement horizontal, portant un élément d'immobilisation (19) à une de ses extrémités.

8. Système de propulsion électrique amovible selon la revendication 7, dans lequel le bras de longueur variable (36) est adapté pour faire varier la distance entre l'au moins une roue non entrainée (4) et le bras d'arrimage (20).

9. Système de propulsion électrique amovible selon la revendication 8, dans lequel le bras de longueur variable (36) est adapté pour que la distance entre l'au moins une roue non entraînée (4) et le bras d'arrimage (20) puisse être modifiée d'au moins 150 mm.

10. Système de propulsion électrique amovible selon la revendication 8 ou la revendication 9, dans lequel le bras de longueur variable (36) est adapté pour que la distance entre l'au moins une roue non entraînée (4) et le bras d'arrimage (20) puisse être modifiée entre 200 et 500 mm.

11. Système de propulsion électrique amovible selon l'une quelconque des revendications précédentes, dans lequel les moyens de levage comprennent une structure articulée en partie centrale du châssis entre l'au moins une roue motorisée (3) et l'au moins une roue non motorisée (4).

12. Système de propulsion électrique amovible selon l'une des revendications précédentes, pour lequel les moyens d'attelage comprennent des moyens de réglage en position longitudinale, de préférence, les moyens de réglage étant commandés par un moyen de pilotage.

13. Attelage comprenant un objet roulant (13) et un système de propulsion électrique (1) selon l'une des revendications précédentes, l'objet roulant (13) étant attelé au système de propulsion électrique (1) par lesdits moyens d'attelage (5).

14. Attelage selon la revendication 13, comprenant des moyens de blocage directionnel adaptés pour : débloquer la rotation de la roue non motorisée (4) autour d'un axe vertical pour actionner le bras de longueur variable (36) ; et/ou bloquer la rotation de la roue non motorisée (4) autour de l'axe vertical pour déplacer l'attelage.

15. Procédé d'attelage d'un objet roulant (13) à un système de propulsion électrique (1) selon l'une quelconque des revendications 1 à 12, comprenant au moins l'étape suivante :
faire varier la distance entre l'au moins une roue entraînée (3) et l'au moins une roue non entrainée (4) au moyen d'au moins un bras de longueur variable (36).

## Patentansprüche

1. Lösbares elektrisches Antriebssystem für ein rollendes Objekt (13), wobei das Antriebssystem (1) ein Fahrgestell (2), das mit mindestens einem von einer elektrischen Maschine (10) angetriebenen Rad (3) und mindestens einem nicht angetriebenen Rad (4) ausgestattet ist, einen Lenker (6) und Mittel zum Ankuppeln (5) des Antriebssystems (1) an das rollende Objekt (13) umfasst, wobei die Ankupplungsmittel (5) Mittel zum Greifen, Ausrichten, Feststellen und Heben mindestens eines Rades (14) des rollenden Objekts (13) umfassen, wobei das Antriebssystem (1) außerdem umfasst:
Mittel zur Unterstützung des Fahrens, die mindestens einen Arm variabler Länge (36) umfassen, der dazu eingerichtet ist, eine Änderung des Abstands zwischen dem mindestens einen angetriebenen Rad (3) und dem mindestens einen nicht angetriebenen Rad (4) zu bewirken, **dadurch gekennzeichnet, dass**
die Mittel zum Ausrichten dazu eingerichtet sind, das mindestens eine Rad (14) des rollenden Objekts (13) in einer Richtung auszurichten, die im Wesentlichen senkrecht zur Längsrichtung (x) des Fahrgestells (2) des Antriebssystems (1) ist.

2. Lösbares elektrisches Antriebssystem nach Anspruch 1, wobei der Arm variabler Länge (36) einerseits von dem nicht angetriebenen Rad (4) gestützt wird und andererseits mit dem Fahrgestell (2) verbunden ist oder mit den Ankupplungsmitteln (5) verbunden ist, die ein Feststellelement (19) tragen.

3. Lösbares elektrisches Antriebssystem nach Anspruch 1 oder Anspruch 2, wobei der Arm variabler Länge (36) im Wesentlichen horizontal ist und eine Hauptachse umfasst, die im Wesentlichen parallel zur Längsrichtung (x) des Fahrgestells (2) ist.

4. Lösbares elektrisches Antriebssystem nach Anspruch 3, welches einen Aktuator umfasst, der mit dem Arm variabler Länge (36) und mit dem nicht motorgetriebenen Abschnitt (27) verbunden ist, um eine Änderung der Länge des Armes variabler Länge (36) zu bewirken.

5. Lösbares elektrisches Antriebssystem nach Anspruch 4, welches Mittel zur Richtungsblockierung umfasst, die dazu eingerichtet sind, die Drehung des nicht motorgetriebenen Rades (4) um eine vertikale Achse zu blockieren/zu entsperren, und wobei die Lenkbewegung des nicht motorgetriebenen Rades (4) so eingerichtet ist, dass sie während der Betätigung des Aktuators frei erfolgen kann.

6. Lösbares elektrisches Antriebssystem nach einem der vorhergehenden Ansprüche, wobei die Mittel zum Greifen mindestens einen Satz von zwei Greifelementen (18) umfassen, deren Hauptachsen im Wesentlichen senkrecht zur Längsrichtung (x) des Fahrgestells (2) sind, wobei die zwei Greifelemente (18) dazu eingerichtet sind, das Rad (14) des rollenden Objekts (13) zu erfassen.

7. Lösbares elektrisches Antriebssystem nach einem der vorhergehenden Ansprüche, wobei die Mittel zum Feststellen einen im Wesentlichen horizontalen Kopplungsarm (20) umfassen, der an einem seiner Enden ein Feststellelement (19) trägt.

8. Lösbares elektrisches Antriebssystem nach Anspruch 7, wobei der Arm variabler Länge (36) dazu eingerichtet ist, eine Änderung des Abstands zwischen dem mindestens einen nicht angetriebenen Rad (4) und dem Kopplungsarm (20) zu bewirken.

9. Lösbares elektrisches Antriebssystem nach Anspruch 8, wobei der Arm variabler Länge (36) dazu eingerichtet ist, dass der Abstand zwischen dem mindestens einen nicht angetriebenen Rad (4) und dem Kopplungsarm (20) um mindestens 150 mm geändert werden kann.

10. Lösbares elektrisches Antriebssystem nach Anspruch 8 oder Anspruch 9, wobei der Arm variabler Länge (36) dazu eingerichtet ist, dass der Abstand zwischen dem mindestens einen nicht angetriebenen Rad (4) und dem Kopplungsarm (20) zwischen 200 und 500 mm geändert werden kann.

11. Lösbares elektrisches Antriebssystem nach einem der vorhergehenden Ansprüche, wobei die Mittel zum Heben eine Gelenkstruktur im mittleren Teil des Fahrgestells zwischen dem mindestens einen motorgetriebenen Rad (3) und dem mindestens einen nicht motorgetriebenen Rad (4) umfassen.

12. Lösbares elektrisches Antriebssystem nach einem der vorhergehenden Ansprüche, wobei die Ankupplungsmittel Mittel zur Einstellung der Längsposition umfassen, wobei die Mittel zur Einstellung vorzugsweise von einem Steuerungsmittel gesteuert werden.

13. Gespann, welches ein rollendes Objekt (13) und ein elektrisches Antriebssystem (1) nach einem der vorhergehenden Ansprüche umfasst, wobei das rollende Objekt (13) durch die Ankupplungsmittel (5) an das elektrische Antriebssystem (1) angekuppelt ist.

14. Gespann nach Anspruch 13, welches Mittel zur Richtungsblockierung umfasst, die dazu eingerichtet sind: die Drehung des nicht motorgetriebenen Rades (4) um eine vertikale Achse zu entsperren, um den Arm variabler Länge (36) zu betätigen; und/oder die Drehung des nicht motorgetriebenen Rades (4) um die vertikale Achse zu blockieren, um das Gespann zu bewegen.

15. Verfahren zur Ankupplung eines rollenden Objekts (13) an ein elektrisches Antriebssystem (1) nach einem der Ansprüche 1 bis 12, welches mindestens den folgenden Schritt umfasst:
Bewirken einer Änderung des Abstands zwischen dem mindestens einen angetriebenen Rad (3) und dem mindestens einen nicht angetriebenen Rad (4) mittels mindestens eines Armes variabler Länge (36).

## Claims

1. Removable electric propulsion system for a rolling object (13), the propulsion system (1) comprising a chassis (2) provided with at least one wheel (3) driven by an electric machine (10), and with at least one non-driven wheel (4), a handle (6) and means (5) for hitching the propulsion system (1) to the rolling object (13), said hitching means (5) comprising means for gripping, steering, immobilizing and lifting at least one wheel (14) of the rolling object (13), the propulsion system (1) further comprising:
driving assistance means comprising at least one arm of variable length (36) designed to vary the distance between the at least one driven wheel (3) and the at least one non-driven wheel (4), **characterized in that** the steering means are designed to steer the at least one wheel (14) of the rolling object (13) in a direction substantially perpendicular to the longitudinal direction (x) of the chassis (2) of the propulsion system (1) .

2. Removable electric propulsion system according to Claim 1, wherein the arm of variable length (36) is, on the one hand, supported by the non-driven wheel (4), and, on the other hand, connected to the chassis (2) or connected to the hitching means (5) bearing an immobilization element (19).

3. Removable electric propulsion system according to Claim 1 or Claim 2, wherein the arm of variable length (36) is substantially horizontal and comprises a main axis substantially parallel to the longitudinal direction (x) of the chassis (2).

4. Removable electric propulsion system according to Claim 3, comprising an actuator connected to said arm of variable length (36) and to the non-motorized portion (27) so as to vary the length of said arm of variable length (36).

5. Removable electric propulsion system according to Claim 4, comprising directional blocking means designed to block/unblock the rotation of the non-motorized wheel (4) about a vertical axis, and wherein the directional movement of the non-motorized wheel (4) is designed to be left free during the actuation of the actuator.

6. Removable electric propulsion system according to any one of the preceding claims, wherein the gripping means comprise at least one set of two grasping elements (18) of which the main axes are substantially perpendicular to the longitudinal direction (x) of the chassis (2), the two grasping elements (18) being designed to capture the wheel (14) of the rolling object (13) .

7. Removable electric propulsion system according to any one of the preceding claims, wherein the immobilization means comprise a substantially horizontal anchoring arm (20), bearing an immobilization element (19) at one of its ends.

8. Removable electric propulsion system according to Claim 7, wherein the arm of variable length (36) is designed to vary the distance between the at least one non-driven wheel (4) and the anchoring arm (20).

9. Removable electric propulsion system according to Claim 8, wherein the arm of variable length (36) is designed such that the distance between the at least one non-driven wheel (4) and the anchoring arm (20) can be modified by at least 150 mm.

10. Removable electric propulsion system according to Claim 8 or Claim 9, wherein the arm of variable length (36) is designed such that the distance between the at least one non-driven wheel (4) and the anchoring arm (20) can be modified between 200 and 500 mm.

11. Removable electric propulsion system according to any one of the preceding claims, wherein the lifting means comprise an articulated structure in the central part of the chassis between the at least one motorized wheel (3) and the at least one non-motorized wheel (4).

12. Removable electric propulsion system according to one of the preceding claims, for which the hitching means comprise means for adjusting the longitudinal position, the adjustment means preferably being controlled by a control means.

13. Hitch comprising a rolling object (13) and an electric propulsion system (1) according to one of the preceding claims, the rolling object (13) being hitched to the electric propulsion system (1) by said hitching means (5) .

14. Hitch according to Claim 13, comprising directional blocking means designed to: unblock the rotation of the non-motorized wheel (4) about a vertical axis so as to actuate the arm of variable length (36); and/or block the rotation of the non-motorized wheel (4) about the vertical axis so as to move the hitch.

15. Method for hitching a rolling object (13) to an electric propulsion system (1) according to any one of Claims 1 to 12, comprising at least the following step: varying the distance between the at least one driven wheel (3) and the at least one non-driven wheel (4) by means of at least one arm of variable length (36).
